# EUROPEAN PATENT APPLICATION

(11) **EP 4 679 573 A1**
(43) Date of publication of application: **14.01.2026**
(21) Application number: 24770624.5
(22) Date of filing: 04.03.2024
(51) Int. Cl.: H01M 12/08, C25B 1/135, C25B 9/015, H01M 8/04, H01M 8/04701, H01M 8/04746

(54) **CARBON-AIR SECONDARY BATTERY**

(30) Priority: 10.03.2023 JP 2023037781
(71) Applicant: INSTITUTE OF SCIENCE TOKYO, Tokyo 152-8550 (JP)
(72) Inventor: IHARA, Manabu, Tokyo 152-8550 (JP); KAMEDA, Keisuke, Tokyo 152-8550 (JP); TAKAGI, Reimi, Tokyo 152-8550 (JP); WAKAMIYA, Taishiro, Tokyo 152-8550 (JP)
(74) Representative: dompatent
(86) International application number: PCT/JP2024/008157
(87) International publication number: WO 2024/190513

(57) **Abstract**

The present invention provides a carbon/air secondary battery that can secure a large amount of stored electricity, has high charge/discharge efficiency, and has good cycle characteristics.

A secondary battery 1 has a reactor 20 in which a negative electrode 21 is installed inside, which is separated from the outside by an electrolyte 23 and which is configured to store carbon that deposits during charging inside, and a structure 60 which surrounds the reactor 20 and suppresses heat loss due to radiant heat transfer from the reactor 20. During charging, carbon dioxide is electrolyzed on the surface of the negative electrode 21, causing carbon to deposit on the negative electrode side, which is a closed system, and at the positive electrode 22, oxygen is generated from oxide ions which are generated at the negative electrode 21 and are permeating the electrolyte 23. During discharging, oxide ions are generated from oxygen at the positive electrode 22, and carbon and/or carbon monoxide are electrochemically oxidized on the surface of the negative electrode 21 to generate carbon dioxide.

## Description

### TECHNICAL FIELD

The present invention relates to a secondary battery, and more particularly to a secondary battery that utilizes a combination of electrochemical and thermochemical reactions of carbon (carbon/air secondary battery).

### BACKGROUND ART

Solid oxide cells (Solid Oxide Fuel Cells; SOFCs), which have a laminated structure in which an electrolyte layer (solid electrolyte layer) made of an ion-conducting solid oxide (oxide ion conductor) is placed between a positive electrode (air electrode) and a negative electrode (fuel electrode), are expected as third-generation fuel cells, and development of them is progressing.

In the solid oxide cells, the ion-conducting solid oxide having high permeability of oxide ions (O²⁻) is used as an electrolyte. The oxide ions generated at the positive electrode permeate the electrolyte and react with reducing agents the reducing agent such as hydrogen (H₂), carbon monoxide (CO), and methane (CH₄) at the negative electrode to generate electrical energy (for example, Patent Document 1).

In addition, a direct carbon fuel cell (DCFC) has been proposed, which uses solid carbon as a reducing agent (solid fuel). In particular, the present inventors have proposed a rechargeable direct carbon fuel cell (RDCFC) that utilizes thermal decomposition of hydrocarbons and the like to repeatedly supply solid carbon to the negative electrode of the DCFC (Patent Documents 2 to 3 and Non-Patent Documents 1 to 3).

In DCFCs and RDCFCs, carbon dioxide (CO₂) is generated by oxidization of carbon at the negative electrode during discharging, and further improvement is required in order to realize a CO₂ emission-free society.

The present inventors have proposed a carbon/air secondary battery (CASB) as a secondary battery (storage battery) that can repeatedly utilize carbon dioxide generated by discharging (Patent Document 4 and Non-Patent Document 4).

A carbon/air secondary battery is a secondary battery that utilizes a combination of electrochemical and thermochemical reactions of carbon.

In a carbon/air secondary battery, the negative electrode side is a closed system, and carbon dioxide can be stored inside the closed system. In a carbon/air secondary battery, by charging, carbon dioxide is converted into carbon by an electrochemical reaction on a negative electrode and a thermochemical reaction in the closed system, and carbon is deposited in the closed system. During discharging, this carbon is used as fuel and converted into carbon dioxide, which is stored in a closed system. For this reason, the carbon-air secondary batteries are CO₂ emission-free.

In addition, the theoretical volumetric energy density of a carbon/air secondary battery is 1625 Wh/L when carbon dioxide is stored at 25°C and 6.4 MPa, which is large, thereby application of the carbon air secondary battery as a stationary large-capacity power storage system is expected.

In order to put carbon/air secondary batteries into practical use, it is required to secure as large an amount of stored electricity as possible with the equipment as compact as possible. In addition, it is also important that energy loss does not occur during charging or discharging (charge/discharge efficiency is high). Furthermore, it is also important that a cycle life is long, from the viewpoint of equipment life and maintenance effort.

From the above-mentioned viewpoints and the like, the carbon/air secondary battery is required to be further improved.

### PRIOR ART DOCUMENTS

### PATENT DOCUMENTS

[Patent Document 1] JP H9-129256 A
[Patent Document 2] JP 5226290 B
[Patent Document 3] JP 5284596 B
[Patent Document 4] JP 7182251 B

### NON-PATENT DOCUMENTS

[Non-Patent Document 1] M. Ihara, K. Matsuda, H. Sato and C. Yokoyama, Solid State Ionics, 175, (2004), 51-54 [Non-Patent Document 2] M. Ihara and S. Hasegawa, J. Electrochem. Soc., 153 (8), (2006), A1544-A1546 [Non-Patent Document 3] S. Hasegawa and M. Ihara, J. Electrochem. Soc., 155 (1), (2008), B58-B63 [Non-Patent Document 4] K. Kameda, S. Manzhos and M. Ihara, J. Power Sources, 516, (2021), 230681

### SUMMARY OF THE INVENTION

### PROBLEMS TO BE SOLVED BY THE INVENTION

The present invention has been accomplished in view of the above-mentioned background art, and a problem to be solved by the present invention is to provide a carbon/air secondary battery that can secure a large amount of stored electricity, has high charge/discharge efficiency, and has good cycle characteristics.

### MEANS FOR SOLVING THE PROBLEMS

As a result of extensive studies to solve the above problems, the present inventors have focused the following matters. In a carbon/air secondary battery, in order to efficiently utilize carbon stored in a closed system (negative electrode side), the inside of the cell is forced to be heated to a high temperature during discharging, resulting in large energy loss. Since the entropy loss (TΔS), which is theoretically a factor in decreasing charge/discharge efficiency, is almost zero in the charge/discharge reaction of a carbon/air secondary battery, the introduction of a highly heat-insulating structure is easily directly connected to improved charge/discharge efficiency, and even if the interval between charge/discharge is long, it is possible to suppress decreasing of efficiency reduction and charge/discharge can be performed immediately. Besides, the present inventors have found that by surrounding a cell of a carbon/air secondary battery with a specific structure, it is possible to suppress energy loss and achieve a secondary battery with high charge and discharge efficiency, and have thus completed the present invention.

That is, the present invention provides a secondary battery having a cell comprising a negative electrode, a positive electrode, and an electrolyte made of a gas-impermeable and ion-conductive solid oxide placed in contact with the negative electrode and the positive electrode, wherein during charging, carbon dioxide is electrolyzed on the surface of the negative electrode, causing carbon to deposit on the negative electrode side, which is a closed system, and at the positive electrode, oxygen is generated from oxide ions which are generated at the negative electrode and are permeating the electrolyte, and during discharging, oxide ions are generated from oxygen at the positive electrode, and carbon and/or carbon monoxide are electrochemically oxidized on the surface of the negative electrode to generate carbon dioxide, wherein the secondary battery has a reactor in which the negative electrode is installed inside, which is separated from the outside by the electrolyte and which is configured to store carbon that deposits during charging inside, and a structure which surrounds the reactor and suppresses heat loss due to radiant heat transfer from the reactor.

### EFFECTS OF THE INVENTION

According to the present invention, it is possible to provide a carbon/air secondary battery that can secure a large amount of stored electricity, has high charge/discharge efficiency, and has good cycle characteristics.

### BRIEF DESCRIPTION OF DRAWINGS

[Figure 1]

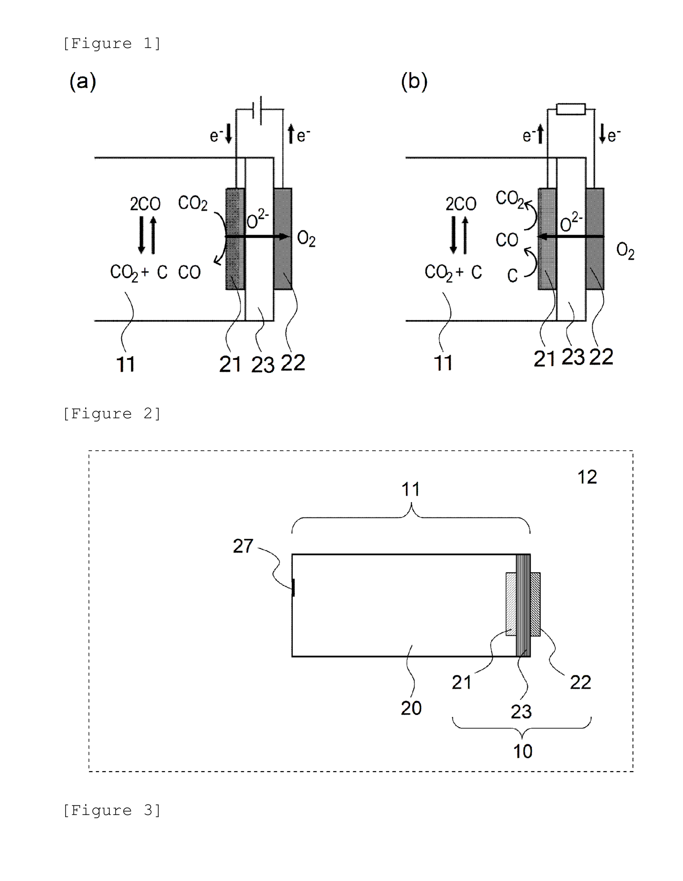

   Figure 1 is a schematic diagram showing a reaction in a secondary battery of the present invention.
   (a) during charging (b) during discharging
[Figure 2]
   Figure 2 is a conceptual diagram of a cell, a reactor, and the like, in a secondary battery of the present invention.
[Figure 3]
   Figure 3 is a conceptual diagram of a cell, a reactor, and the like, in a secondary battery of the present invention (when a closed system has a tank).
[Figure 4]

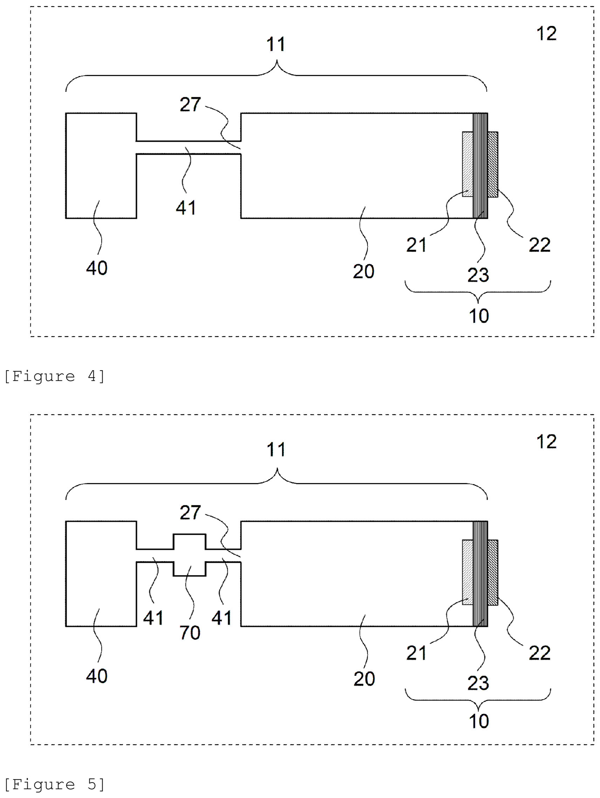

   Figure 4 is a conceptual diagram of a cell, a reactor, and the like, in a secondary battery of the present invention (when a closed system has a tank, and the reactor and the tank are connected via a reservoir 70).
[Figure 5]
   Figure 5 is a graph showing the temperature and pressure dependences at equilibrium of Boudouard reaction.
[Figure 6]

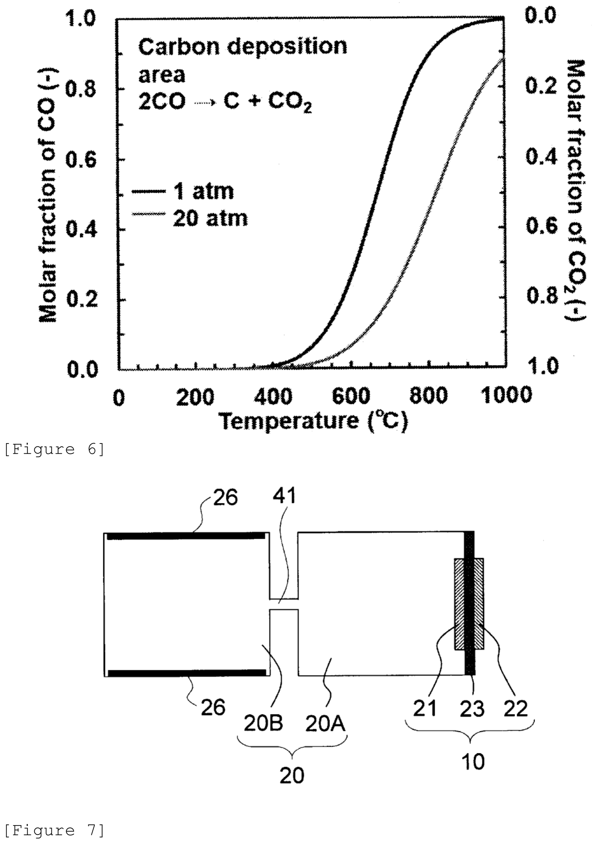

   Figure 6 is a conceptual diagram of a reactor in a secondary battery of the present invention comprising an electrochemical reaction section and a thermochemical reaction section.
[Figure 7]
   Figure 7 is a conceptual diagram of a reactor and the like in a secondary battery of the present invention, in which gas is continuously circulated between an electrochemical reaction section and a thermochemical reaction section (during charging).
[Figure 8]

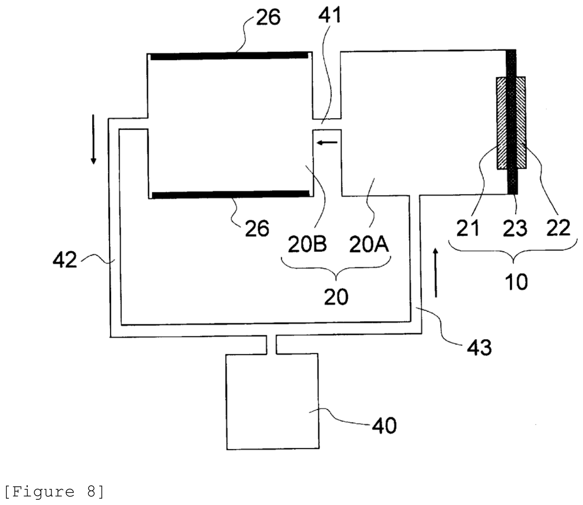

   Figure 8 is a conceptual diagram of a reactor and the like in a secondary battery of the present invention, in which gas is continuously circulated between an electrochemical reaction section and a thermochemical reaction section (during discharging).
[Figure 9]

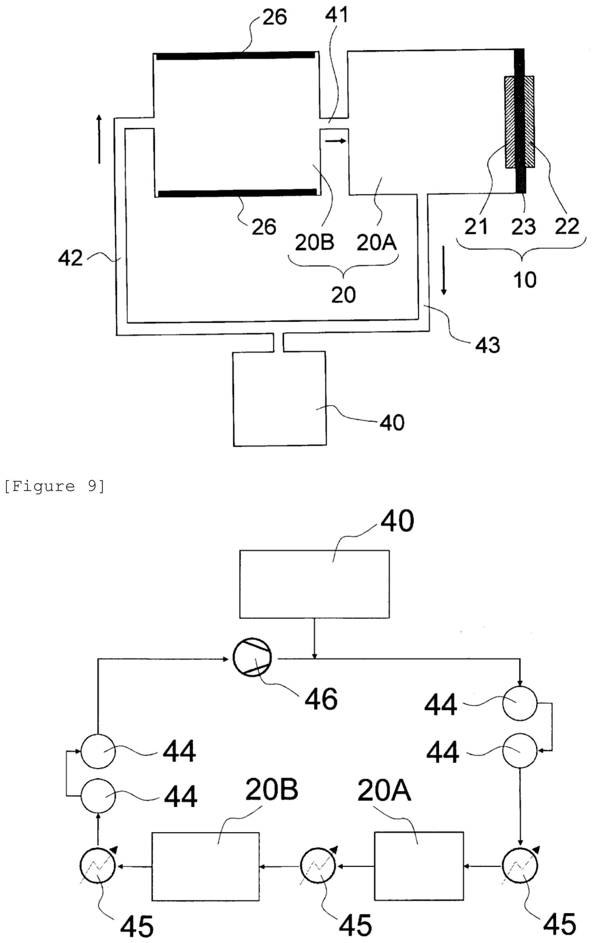

   Figure 9 is a flow diagram in a secondary battery of the present invention, in which gas is continuously circulated between an electrochemical reaction section and a thermochemical reaction section, and which is equipped with a gas flow direction control means (during charging).
[Figure 10]

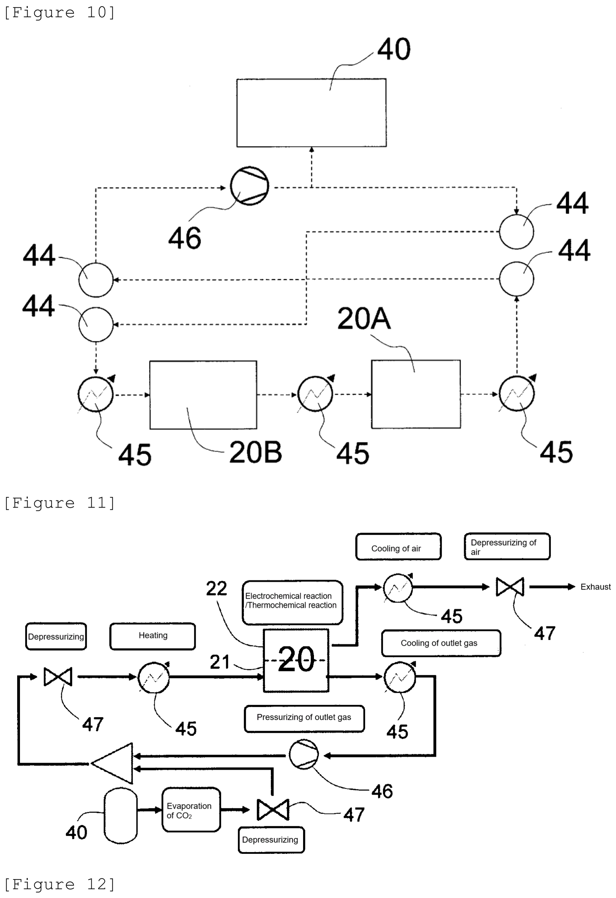

   Figure 10 is a flow diagram in a secondary battery of the present invention, in which gas is continuously circulated between an electrochemical reaction section and a thermochemical reaction section, and which is equipped with a gas flow direction control means (during discharging).
[Figure 11]
   Figure 11 is a flow diagram in a secondary battery of the present invention equipped with means for adjusting temperature and pressure (during charging).
[Figure 12]
   Figure 12 is a flow diagram in a secondary battery of the present invention equipped with means for adjusting temperature and pressure (during charging; when utilizing gas-liquid equilibrium in a tank).
[Figure 13]

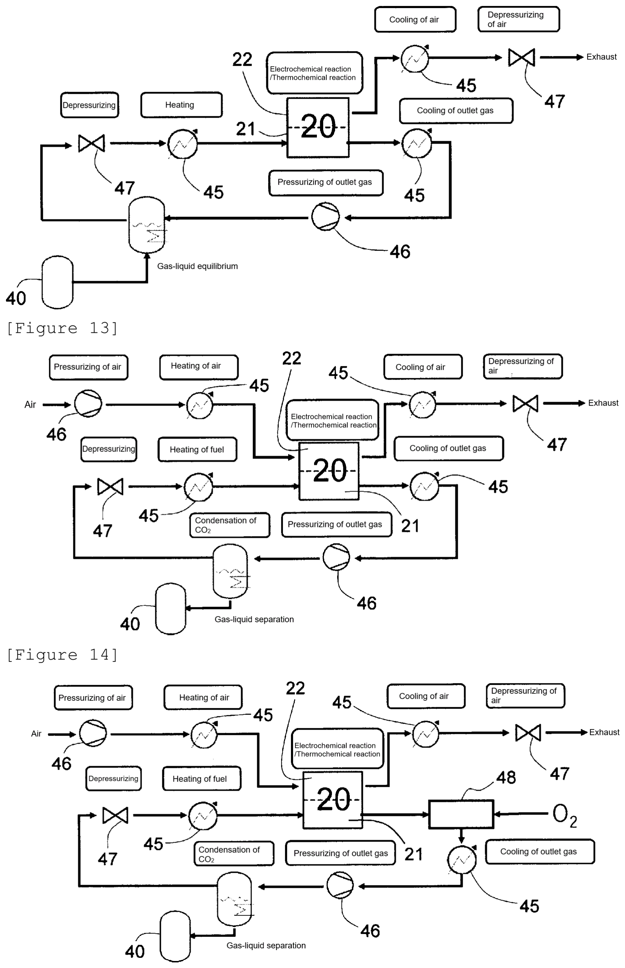

   Figure 13 is a flow diagram in a secondary battery of the present invention equipped with means for adjusting temperature and pressure (during discharging).
[Figure 14]
   Figure 14 is a flow diagram in a secondary battery of the present invention equipped with a combustor (during discharging).
[Figure 15]

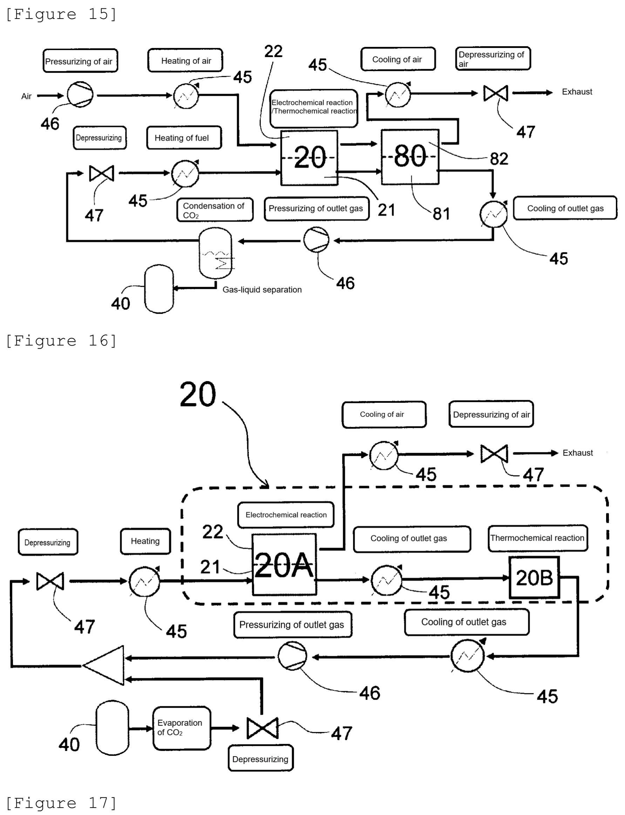

   Figure 15 is a flow diagram in a secondary battery of the present invention equipped with a gas ratio adjustment cell (during discharging).
[Figure 16]
   Figure 16 is a flow diagram in a secondary battery of the present invention, in which a reactor comprises an electrochemical reaction section and a thermochemical reaction section (during charging; when not having a reservoir).
[Figure 17]
   Figure 17 is a flow diagram in a secondary battery of the present invention, in which a reactor comprises an electrochemical reaction section and a thermochemical reaction section (during charging; when having a reservoir).
[Figure 18]

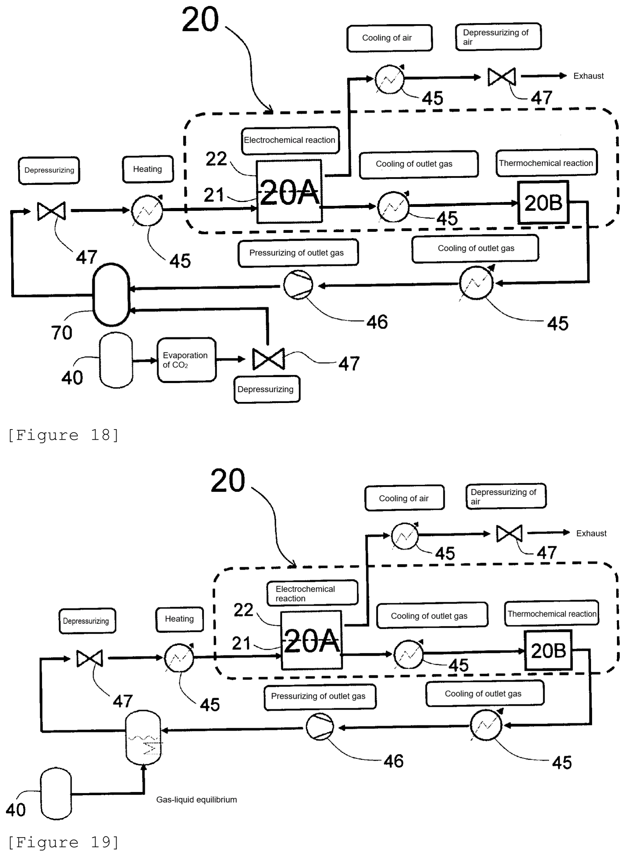

   Figure 18 is a flow diagram in a secondary battery of the present invention, in which a reactor comprises an electrochemical reaction section and a thermochemical reaction section (during charging; when utilizing gas-liquid equilibrium in a tank).
[Figure 19]
   Figure 19 is a flow diagram in a secondary battery of the present invention, in which a reactor comprises an electrochemical reaction section and a thermochemical reaction section (during discharging).
[Figure 20]

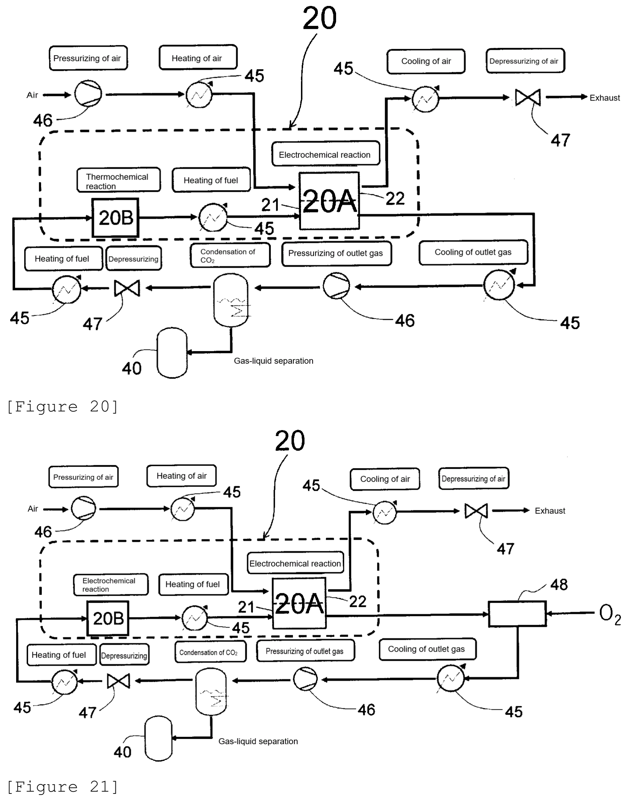

   Figure 20 is a flow diagram of a secondary battery of the present invention, in which a reactor comprises an electrochemical reaction section and a thermochemical reaction section and equipped with a combustor (during discharging).
[Figure 21]
   Figure 21 is a conceptual diagram of a reactor in a secondary battery of the present invention in which the cell has a plurality of negative electrode.
[Figure 22]

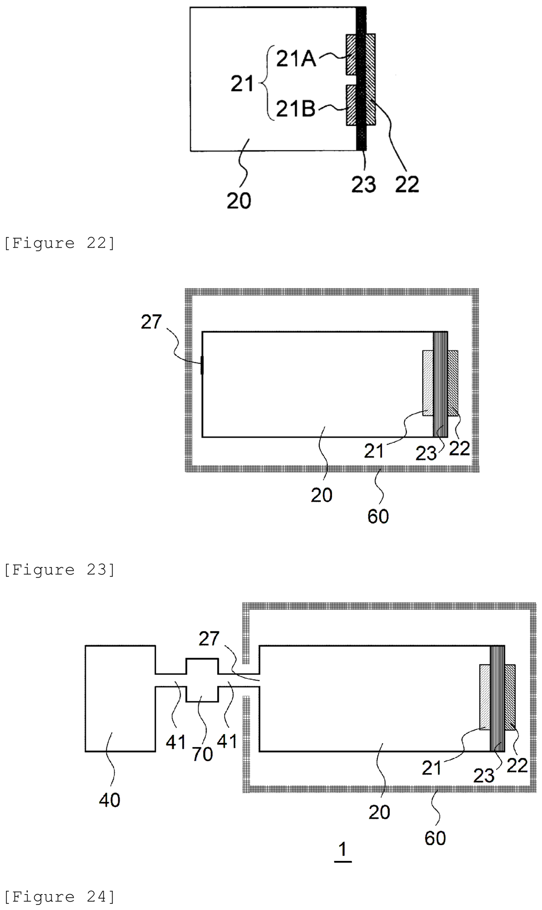

   Figure 22 is a conceptual diagram of a secondary battery of the present invention.
[Figure 23]
   Figure 23 is a conceptual diagram of a secondary battery of the present invention (when a closed system has a tank, and the reactor and the tank are connected via a reservoir 70).
[Figure 24]
   Figure 24 is a perspective view of a cell, a reactor, and the like, in a secondary battery of Embodiment 1 of the present invention.
[Figure 25]

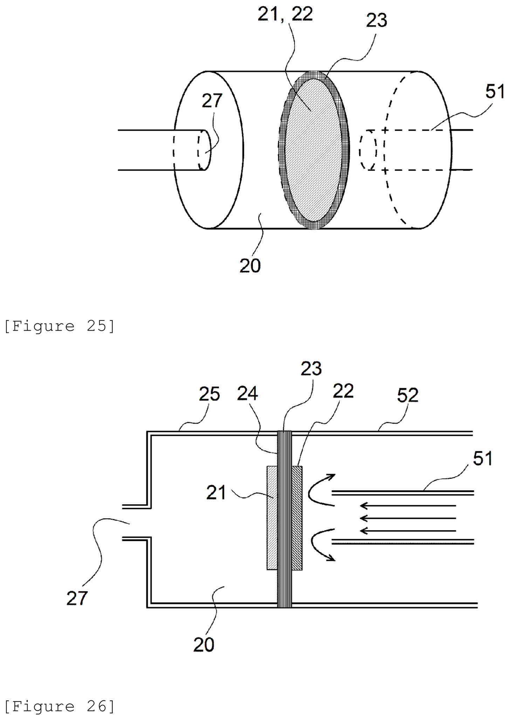

   Figure 25 is a cross-sectional view of a cell, a reactor, and the like, in a secondary battery of Embodiment 1 of the present invention.
[Figure 26]
   Figure 26 is a cross-sectional view showing a position of a catalyst installed section in a secondary battery of Embodiment 1 of the present invention.
[Figure 27]

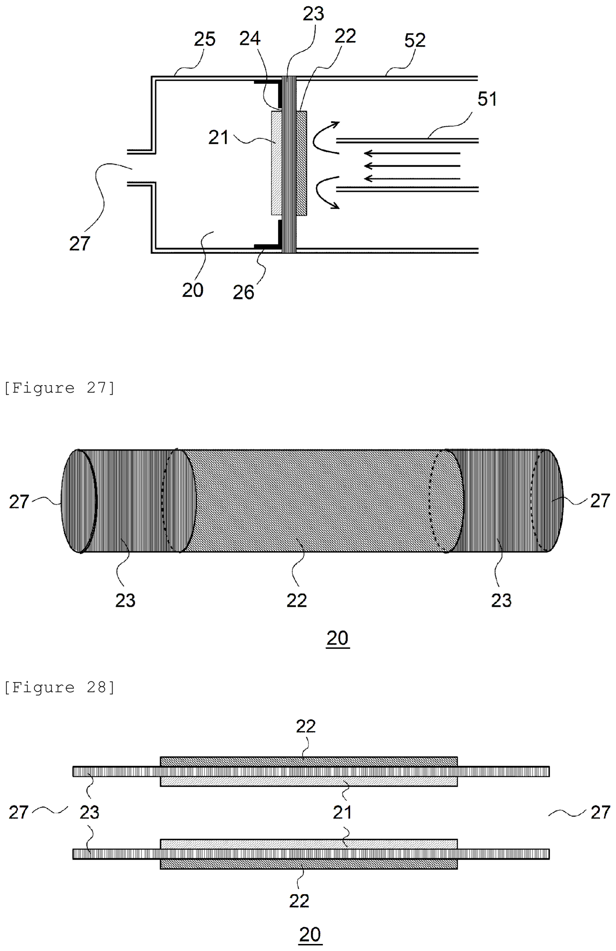

   Figure 27 is a perspective view of a cell, a reactor, and the like, in a secondary battery of Embodiment 2 of the present invention.
[Figure 28]
   Figure 28 is a cross-sectional view of a cell, a reactor, and the like, in a secondary battery of Embodiment 2 of the present invention.
[Figure 29]

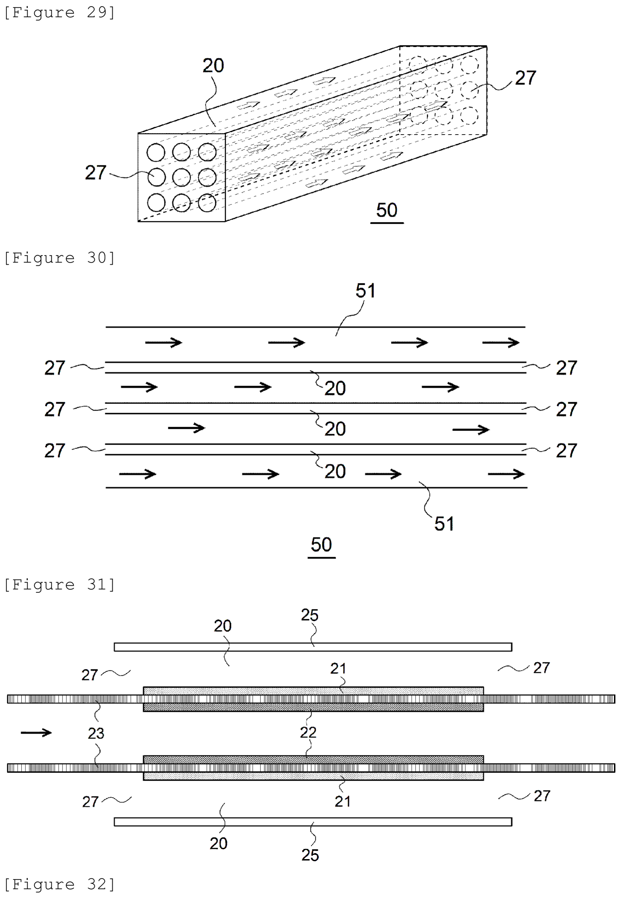

   Figure 29 is a perspective view of a module, a gas flow passage, and the like, in a secondary battery of Embodiment 2 of the present invention.
[Figure 30]
   Figure 30 is a cross-sectional view of a module, a gas flow passage, and the like, in a secondary battery of Embodiment 2 of the present invention.
[Figure 31]
   Figure 31 is a cross-sectional view of a cell, a reactor, and the like, in a secondary battery of Embodiment 3 of the present invention.
[Figure 32]
   Figure 32 is a cross-sectional view of a module, a gas flow passage, and the like, in a secondary battery of Embodiment 3 of the present invention.
[Figure 33]

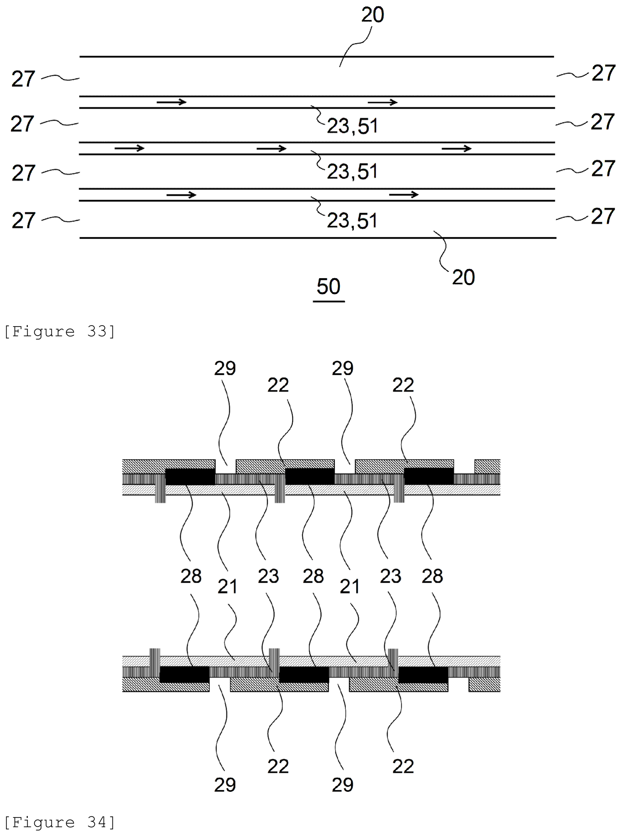

   Figure 33 is a cross-sectional view of a cell, a reactor, and the like, in a secondary battery of Embodiment 4 of the present invention.
[Figure 34]
   Figure 34 is a cross-sectional view of a cell, a reactor, and the like, in a secondary battery of Embodiment 4 of the present invention (when having a support material).
[Figure 35]

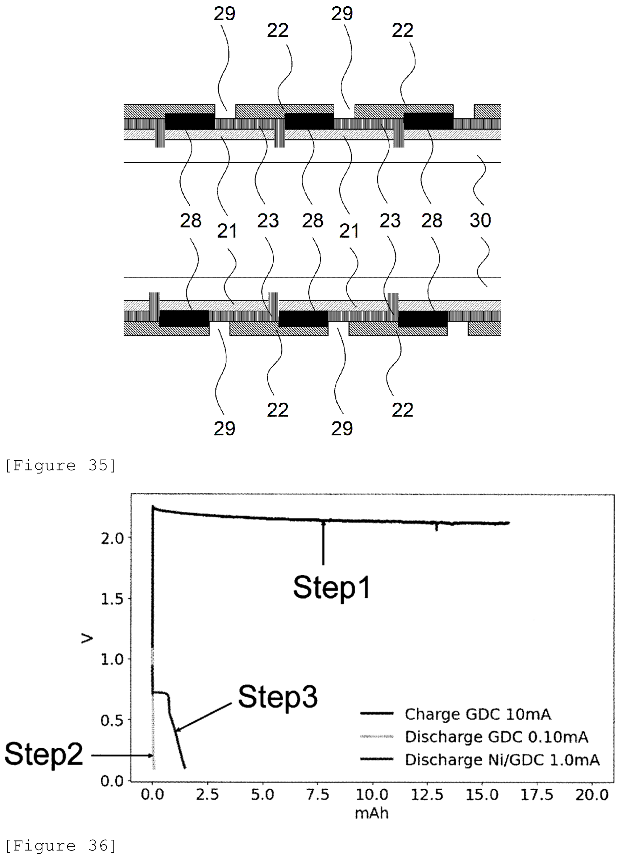

   Figure 35 is a graph showing the results of charging and discharging in Verification Example 1.
[Figure 36]
   Figure 36 is a schematic diagram of a reactor used in Verification Example 2, which is divided into an electrochemical reaction section and a thermochemical reaction section.
[Figure 37]

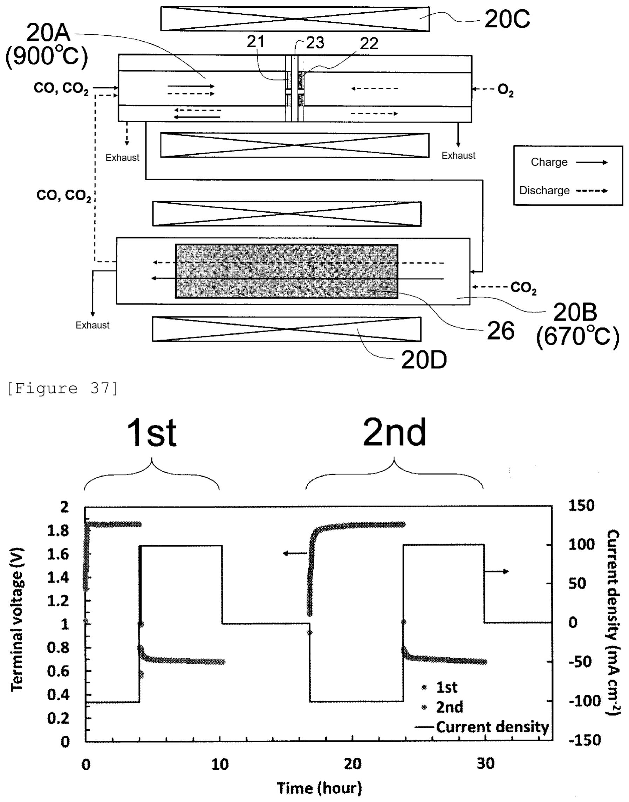

   Figure 37 is a graph showing the results of charging and discharging in Verification Example 2.

### EMBODIMENTS TO CARRY OUT THE INVENTION

Hereinafter, the present invention is explained, but the present invention is not limited by the following embodiments, and can be optionally changed to be implemented.

The secondary battery of the present invention is an improvement over the carbon/air secondary battery. The carbon/air secondary battery (CASB) was developed by the present inventors, and details thereof are described in

### Patent Document 4 and Non-Patent Document 4.

Figure 1 shows a schematic diagram of the vicinity of an electrode of a secondary battery of the present invention. The secondary battery 1 of the present invention has a cell 10 comprising a negative electrode 21, a positive electrode 22, and an electrolyte 23 made of a gas-impermeable and ion-conductive solid oxide placed in contact with the negative electrode 21 and the positive electrode 22.

The negative electrode 21 side of the secondary battery 1 of the present invention is a closed system 11 as described below, and carbon dioxide is stored in the closed system 11.

The positive electrode 22 side of the secondary battery 1 of the present invention is usually an open system 12, and the positive electrode 22 is in contact with oxygen in the air. The oxygen in the positive electrode side is taken into the positive electrode 22 during discharging and is involved in the reaction.

Figure 1(a) is a schematic diagram showing a reaction during charging of a secondary battery 1 of the present invention. During charging, carbon dioxide is electrolyzed on the surface of the negative electrode 21, causing carbon to deposit on the negative electrode side, which is a closed system 11.

The specific reactions in the negative electrode 21 during charging is presumed to be as follows.

CO₂ + 2e⁻ → CO+O₂ (R1)

2CO ←→ CO₂ + C (R2)

(R1) is a reduction reaction (an electrochemical reduction reaction) on the surface of the negative electrode 21.

(R2) is a thermochemical reaction between solid carbon and carbon dioxide, and carbon monoxide, known as the Boudouard reaction.

From (R1) and (R2), the total reaction in the negative electrode during charging is as follows.

CO₂ + 4e⁻ → C + 2O²⁻ (R3)

In the case of charging, it is considered to be difficult to electrochemically reduce carbon dioxide directly to carbon (to directly cause (R3)), since the overvoltage is generally large.

In addition, generation of carbon by reduction of carbon monoxide produced by (R1) (reaction formula (R4) below) also has a large overvoltage and is thought to be difficult. Therefore, electrolysis of carbon dioxide is considered to have low energy efficiency.

CO + 2e⁻ → C + O²⁻ (R4)

Therefore, in the secondary battery 1 of the present invention, which is a carbon/air secondary battery, carbon monoxide is generated on the surface of the negative electrode 21 by a reduction reaction (R1), and the generated carbon monoxide is converted into carbon dioxide and carbon by thermochemical reaction (R2), thereby carbon is deposited on the negative electrode 21 side.

Since the negative electrode 21 side is a closed system 11, during charging, carbon (solid carbon) does not necessarily deposit only on the surface of the negative electrode 21, and there is a case in which carbon (solid carbon) deposits on a place other than the surface of the negative electrode 21 (a wall surface or the like in the closed system).

If carbon (solid carbon) deposits on the surface of the negative electrode 21, there is a case in which deterioration of the negative electrode 21 is caused. Therefore, it is desirable to make it easy for carbon to deposit at a place other than the surface of the negative electrode 21 by a method such as using a catalyst, as described below.

During charging, at the positive electrode 22, oxygen (O₂) is generated from oxide ions (O²⁻) which are generated at the negative electrode 21 and are permeating the electrolyte 23 (reaction (R5) below).

O²⁻ → 1/2O²⁻ +2e⁻ (R5)

Figure 1(b) is a schematic diagram showing a reaction during discharging of a secondary battery 1 of the present invention. During discharging, oxide ions are generated from oxygen at the positive electrode (reaction (R6) below).

1/2O₂ + 2e⁻ → O²⁻ (R6)

The positive electrode 22 side is usually an open system 12, and oxygen in the air can be used as the oxygen taken into the positive electrode 22 during discharging. In addition, the secondary battery 1 of the present invention may have a gas flow passage 51 in order to efficiently feed oxygen to the positive electrode 22 during discharging. The gas flowing in the gas flow passage 51 may be, for example, air or pure oxygen supplied from a gas cylinder or the like, as long as it contains oxygen.

During discharging, carbon and/or carbon monoxide are electrochemically oxidized on the surface of the negative electrode 21 to generate carbon dioxide.

The specific reactions in the negative electrode 21 during discharging is presumed to be as follows.

C + O²⁻ → CO + 2e⁻ (R7)

C + 2O²⁻ → CO₂ + 4e⁻ (R8)

CO + O²⁻ → CO₂ + 2e⁻ (R9)

2CO ←→ CO₂ + C (R2)

(R7) to (R9) are oxidation reactions (electrochemical oxidation reactions) on the surface of the negative electrode 21. (R2) is the above-mentioned thermochemical reaction between solid carbon and carbon dioxide, and carbon monoxide.

The total reaction in the negative electrode during discharging is as follows.

C + 2O²⁻ → CO₂ + 4e⁻ (R10)

During discharging, carbon adhered to the surface of the negative electrode 21 is oxidized by oxide ions to generate carbon monoxide and carbon dioxide (reaction (R7) and reaction (R8)), and carbon monoxide is oxidized by oxide ions on the surface of the negative electrode 2 to generate carbon dioxide (reaction (R9)).

In addition, (R2), a thermochemical reaction between solid carbon and carbon dioxide, and carbon monoxide, occurs.

During charging, carbon (solid carbon) does not necessarily deposit only on the surface of the negative electrode 21, and there is a case in which carbon (solid carbon) deposits on a place other than the surface of the negative electrode 21. Carbon (solid carbon) deposited on places other than the surface of the negative electrode 21 is converted into carbon monoxide once by thermochemical reaction (R2), and contributes to discharging by reaction (R9).

Besides, as described above, from the viewpoint of preventing deterioration of the negative electrode 21, it is desirable to make it easy for carbon to deposit at a place other than the surface of the negative electrode 21 during charging. That is, it is desirable that main reaction pathways at the negative electrode during discharging are (R2) and (R9), rather than (R7) and (R8).

Figures 2 to 4 are conceptual diagrams of a cell 10, a reactor 20, and the like, in the secondary battery 1 of the present invention. Figures 2 to 4 are conceptual diagrams and do not show specific shapes of the cell 10, the reactor 20, and the like (specific examples of the shapes of the cell 10, the reactor 20, and the like, will be described later).

The secondary battery 1 of the present invention has a reactor 20 in which the negative electrode 21 is installed inside, which is separated from the outside by the electrolyte 23 and which is configured to store carbon that deposits during charging inside.

It should be noted that "the reactor 20 is separated from the outside by the electrolyte 23" means that no exchange of gas occurs between inside and outside of the reactor 20.

The electrolyte 23 is made of a gas-impermeable and ion-conductive solid oxide. During charging and discharging, the electrolyte 23 allows permeation of oxide ions (O²⁻) but does not allow permeation of gases involved in the reaction (oxygen, carbon dioxide and carbon monoxide).

In the secondary battery 1 of the present invention, since the negative electrode 21 side is a closed system 11, partial pressure of carbon monoxide is increased, making carbon deposition easy. In addition, since the negative electrode 21 side is a closed system 11, carbon dioxide generated in the negative electrode 2 side by discharging is returned to carbon by charging, so that the secondary battery 1 of the present invention does not emit CO₂.

The reactor 20 constitutes a part of the closed system 11, and the carbon (solid carbon) generated by charging is stored inside the reactor 20. As the "inside of the reactor 20" where carbon is stored, the surface of the negative electrode 21, the surface of the electrolyte 23, and parts of the wall surface of the reactor 20 that are not constituted of the electrolyte 23 are mentioned, and a portion where it is desirable to store carbon (carbon deposits by charging) will be described later.

Carbon dioxide generated by discharging is stored inside the closed system 11. Inside the closed system 11, carbon dioxide may be stored in any state, be it gas, liquid or solid. It is desirable to store carbon dioxide in a liquid state because it can store large amounts of carbon dioxide can be stored and because excessive cooling is not necessary.

The closed system 11 in the secondary battery of the present invention may be constituted of only a reactor 20 (Figure 2). In the secondary battery of the present invention, it is desirable that the inside of the reactor 20 can be pressurized. That is, it is desirable to constitute the reactor 20 by with a pressurizable material or the like. "Pressurizable" means that the pressure can be 1 atmosphere or more.

Reaction (R2) is a reaction in which two molecules of carbon monoxide are generated from solid carbon and one molecule of carbon dioxide. As the reaction (R2) proceeds to the left side, the inside of the reactor 20 is electrochemically pressurized. In addition, as described later, there is a case in which the inside of the reactor is pressurized by a pressurizing means 46.

The closed system 11 in the secondary battery of the present invention may have a pressurizable tank 40 connected to the reactor 20. That is, the closed system 11 may be constituted of a reactor 20 and a tank 40 (Figures 3 and 4). In this case, since carbon dioxide is stored in the tank 40, it is not necessary to be able to pressurize the inside of the reactor 20.

When the closed system 11 is constituted of a reactor 20 and a tank 40, a reactor end portion 27 is connected to the tank 40 through a pipe 41. When the closed system 11 is constituted of only a reactor 20, the reactor end portion 27 is sealed.

In the figures (Figures 24 to 34) showing specific cell structures described later, "27" is sealed or connected to a tank 40 through a pipe 41 (the pipe 41 and the tank 40 are omitted in Figures 24 to 34).

As shown in Figures 3 and 4, when the closed system 11 is constituted of the reactor 20 and the tank 40, the tank 40 is connected to the reactor 20 and is pressurizable. Carbon dioxide generated by discharging is stored in a liquid state inside the tank 40.

As shown in Figure 2, when the closed system 11 is constituted of only the reactor 20, there are advantages that the device configuration is simple, the device is miniaturized, and the like. Besides, due to these advantages, application as a portable power source is expected.

As shown in Figures 3 and 4, when the closed system 11 is constituted of the reactor 20 and the tank 40, there are advantages that the storage capacity can be easily adjusted and improved by changing the capacity of the tank, thereby the system volume and the stored electricity can be designed freely by changing the tank capacity according to the use, and the like.

In the reactor 20 and the tank 40, the pressure at which carbon dioxide is stored is preferably 0.2 MPa or more, more preferably 1 MPa or more, further preferably 3 MPa or more, and particularly preferably 6 MPa or more. Besides, the pressure is preferably 100 MPa or less, more preferably 70 MPa or less, further preferably 50 MPa or less, and particularly preferably 20 MPa or less.

When the lower limit of the pressure is equal to or more than the above, a sufficient amount of carbon dioxide can be easily stored, and temperature of liquefaction can be increased, so that temperature suitable for storage can be close to room temperature, thereby simplifying a cooling device. When the upper limit of the pressure is equal to or less than the above, the tank can be produced more inexpensively.

When the closed system 11 is constituted of the reactor 20 and the tank 40, the reactor 20 and the tank 40 may be directly connected (Figure 3), or the reactor 20 and the tank 40 may be connected via a reservoir 70 (Figure 4).

The secondary battery 1 of the present invention may have a control means for controlling temperature and/or pressure during storage and/or supply of carbon dioxide between the reactor and the tank, and the reservoir 70 is an example of such a control means.

By keeping the inside of the reservoir 70 at a specific temperature and pressure, the temperature and pressure of carbon dioxide stored and supplied to the tank 40 can be automatically adjusted to intended values.

As the control means in the secondary battery 1 of the present invention, for example, a pressure regulating valve is mentioned, in addition to the reservoir 70.

As described above, it is desirable that carbon dioxide generated by discharging is stored in a liquid state inside the tank 40. For this reason, it is desirable that the control means perform control such that liquefaction process of carbon dioxide is efficiently performed before the end of the discharge reaction. During the liquefaction process, it is desirable that carbon monoxide does not exist in the reactor 20 as much as possible. Such control is control for realizing such a state.

(R2) is a thermochemical reaction (Boudouard reaction). Figure 5 shows the temperature and pressure dependences at equilibrium of Boudouard reaction.

At the end of discharging, the thermochemical reaction (R2) is shifted to the right side (i.e., the partial pressure of carbon monoxide is decreased and the partial pressure of carbon dioxide is increased), thereby making it possible to efficiently proceed with liquefaction process of carbon dioxide.

That is, the "control to efficiently perform liquefaction process of carbon dioxide" performed by the control means is control to shift (R2) to the right side.

On the other hand, when the partial pressure of carbon monoxide is low, the reaction overvoltage increases and discharge efficiency decreases, so it is desirable for the control means to perform such control immediately before the end of the discharge reaction.

For example, by pressurizing the inside of the reactor 20 (increasing the total pressure inside the reactor 20), (R2) shifts to the right side.

As an example of the "control to efficiently perform liquefaction process of carbon dioxide", control to increase the total pressure inside the reactor 20 at a constant temperature at a latter stage of the discharge reaction, is mentioned.

In addition, by decreasing temperature inside the reactor 20, (R2) shifts to the right side.

As an example of the "control to efficiently perform liquefaction process of carbon dioxide", control to decrease the temperature inside the reactor 20 at a constant pressure at a latter stage of the discharge reaction, is mentioned.

The carbon/air secondary battery consumes carbon (solid carbon) inside the reactor 20 during discharging. As described above, from the viewpoint of preventing deterioration of the negative electrode 21, it is desirable that carbon (solid carbon) stored inside the reactor 20 by charging is deposited (stored) at a place other than the surface of the negative electrode 21 inside the reactor 20.

By installing a catalyst for promoting carbon deposition at a place other than the surface of the negative electrode 21 inside the reactor 20 to make it easy for carbon to deposit at these places, carbon deposition on the surface of the negative electrode 21 becomes easy to be prevented.

That is, in the secondary battery 1 of the present invention, it is desirable that a catalyst for promoting carbon deposition is installed in a negative electrode non-installed section 24 and/or in an electrolyte non-installed section 25 inside the reactor 20.

Here, the "negative electrode non-installed section 24" refers to a part on the electrolyte 23 inside the reactor 20 where the negative electrode 22 does not exist. The "electrolyte non-installed section 25" refers to parts of the boundary separating the inside and outside of the reactor 20 (the wall surface) that are not constituted of the electrolyte 23.

In order to more efficiently suppress deterioration of the negative electrode 21 due to carbon deposition on the surface of the negative electrode 21, the negative electrode 21 side of secondary battery 1, i.e., the inside of the reactor 20 may be constituted to be divided into an electrochemical reaction field and a thermochemical reaction field.

That is, in the secondary battery 1 of the present invention, the reactor 20 may comprise an electrochemical reaction section 20A in which the negative electrode 21 is installed, and a thermochemical reaction section 20B in which a catalyst for promoting carbon deposition is installed, and the electrochemical reaction section 20A and the thermochemical reaction section 20B are connected by a pipe 41 that is a gas flow passage.

Figure 6 shows a conceptual diagram of a reactor 20 comprising the electrochemical reaction section 20A and the thermochemical reaction section 20B.

A negative electrode 21 is installed in the electrochemical reaction section 20A. The thermochemical reaction section 20B has a catalyst installed section 26 on which a catalyst for promoting carbon deposition is installed.

On the surface of the negative electrode 21 of the electrochemical reaction section 20A, reaction (R1) occurs during charging, and reaction (R9) occurs during discharging.

Carbon monoxide generated by reaction (R1) during charging is converted into carbon dioxide and carbon by thermochemical reaction (R2).

The electrochemical reaction section 20A and the thermochemical reaction section 20B are connected by a pipe 41, and gases involved in the reaction (carbon dioxide and carbon monoxide) move through the pipe 41 inside the reactor.

Since adhesion of carbon to the negative electrode 21 cause deterioration of the negative electrode 21, it is desirable to deposit carbon at a place other than the negative electrode 21.

By dividing the reactor 20 into an electrochemical reaction section 20A and a thermochemical reaction section 20B and installing a catalyst installed section 26 in the thermochemical reaction section 20B, carbon deposition due to the thermochemical reaction (R2) becomes easier to occur inside the thermochemical reaction section 20B, and carbon deposition on the negative electrode 21 can be suppressed.

As a result, since deterioration of the negative electrode 21 can be prevented, the life of the negative electrode 21 can be extended and labor for maintenance can be saved.

By dividing the reactor 20 into an electrochemical reaction section 20A and a thermochemical reaction section 20B, control of the temperature and pressure of the electrochemical reaction field (the electrochemical reaction section 20A) and the thermochemical reaction field (the thermochemical reaction section 20B) can be performed separately.

That is, a temperature adjusting means (usually a heating means such as a heat exchanger or a heater) is installed around the electrochemical reaction section 20A and the thermochemical reaction section 20B, respectively, a pressure adjusting means such as a pressure reducing valve or a pump is equipped in the electrochemical reaction section 20A and the thermochemical reaction section 20B.

By dividing the reactor 20 into an electrochemical reaction section 20A and a thermochemical reaction section 20B, it is possible to make the electrochemical reaction and the thermochemical reaction occur under desired conditions, respectively, thereby an improvement in power generation efficiency is expected.

In the secondary battery 1 of the present invention, gas may be continuously circulated between the electrochemical reaction section 20A and the thermochemical reaction section 20B. Figures 7 and 8 show conceptual diagrams of such a reactor.

In addition, although not shown in a diagram, even in the case where the reactor 20 is not divided into the electrochemical reaction section 20A and the thermochemical reaction section 20B in the secondary battery 1 of the present invention, gas may be continuously circulated inside the closed system 11. In particular, when the secondary battery 1 of the present invention has the tank 40, gas may be continuously circulated between the reactor 20 and the tank 40.

In the examples shown in Figures 7 and 8, the electrochemical reaction section 20A and the thermochemical reaction section 20B are connected by a pipe 41, and the thermochemical reaction section 20B is further connected with a pipe 42 toward the tank 40. In addition, a pipe 43 extends from the tank 40 toward the electrochemical reaction section 20A.

With this constitution, gas is continuously circulated between the electrochemical reaction section 20A and the thermochemical reaction section 20B.

It is desirable that the reactor 20 as shown in Figures 7 and 8 has a means for controlling a flow direction and flow rate of the gas circulating inside it.

As a means for controlling the flow direction of the gas, for example, a three-way valve or a four-way valve can be used.

As a means for controlling the flow rate of the gas, for example, a mass flow controller can be used.

Arrows shown in Figure 7 indicate the direction of gas flow during charging. During charging, carbon dioxide stored in the tank 40 is actively supplied to the electrochemical reaction section 20A, reaction (R1) is efficiently occurred on the negative electrode 21, and carbon monoxide generated by (R1) is moved to the thermochemical reaction section 20B, where it is deposited as carbon on a catalyst installed section 26 by thermochemical reaction (R2). Carbon dioxide generated by (R2) passes through pipes 42 and 43 and is supplied again to the electrochemical reaction section 20A, where it is involved in the reaction (R1).

Arrows shown in Figure 8 indicate the direction of gas flow during discharging. During discharging, carbon monoxide is generated by reaction (R2) from carbon stored in the catalyst installed section 26 of the thermochemical reaction section 20B and carbon dioxide inside the closed system. Carbon monoxide that has moved to the electrochemical reaction section 20A causes discharging on the negative electrode 21 by reaction (R9). By flowing the gas in the direction of the arrows shown in Figure 8, carbon monoxide can be efficiently sent to the electrochemical reaction section 20A. Carbon dioxide generated by (R9) passes through the pipes 43 and 42 and is supplied again to the thermochemical reaction section 20B, where carbon monoxide is generated by reaction (R2).

The catalyst installed section 26 on which a catalyst for promoting carbon deposition is installed, is installed in the thermochemical reaction section 20B. There is no particular limitation on how the catalyst installed section 26 is installed. For example, as shown in Figures 6 to 8, the catalyst installed section 26 may be installed on the entire wall surface of the thermochemical reaction section 20B. In addition, a carrier such as glass wool may be installed in the thermochemical reaction section 20B, and a catalyst may be supported on such a carrier to form the catalyst installed section 26 (not shown in a diagram).

Since the space inside the thermochemical reaction section 20B can be effectively utilized, it is desirable to form the catalyst installed section 26 by supporting the catalyst on the carrier.

In the thermochemical reaction section 20B, Boudouard reaction (R2) occurs. As shown in Figure 5, (R2) proceeds to the left side (carbon monoxide) at high temperature and low pressure, and proceeds to the right side at low temperature and high pressure.

By changing the temperature and pressure of the thermochemical reaction section 20B during charging and discharging, charging and discharging can be performed under advantageous conditions.

Specifically, during charging, it is desirable to set the conditions under which carbon is easily stored in the catalyst installed section 26 of the thermochemical reaction section 20B, that is, to set the thermochemical reaction section 20B at low temperature and/or high pressure. During discharging, it is desirable to set the conditions under which carbon stored in the catalyst installed section 26 can be actively converted into carbon monoxide, that is, to set the thermochemical reaction section 20B at high temperature and/or low pressure.

In the electrochemical reaction section 20A, in order to prevent deterioration of the negative electrode 21 or the like, it is desirable that carbon does not deposit.

As shown in Figure 5, Boudouard reaction (R2) easily shifts to the left side at high temperature and low pressure (carbon monoxide easily increases), and easily shift to the right side at low temperature and high pressure (carbon and carbon dioxide easily increases).

Therefore, during charging (during carbon deposition), it is desirable to set the temperature of the electrochemical reaction section 20A higher than the temperature of the thermochemical reaction section 20B.

In this case, the temperature difference between the electrochemical reaction section 20A and the thermochemical reaction section 20B is preferably 100 °C or more, more preferably 150 °C or more, and particularly preferably 200 °C or more.

In addition, during charging (during carbon deposition), it is desirable to reduce the pressure in the electrochemical reaction section 20A.

By adjusting the temperature (or pressure) of the electrochemical reaction section 20A so as to be lower than the curve shown in Figure 5, and by adjusting the temperature (or pressure) of the thermochemical reaction section 20B so as to be lower than the curve shown in Figure 5, it is possible to make carbon deposition does not occur in the electrochemical reaction section 20A.

Figures 9 and 10 show flow diagrams in the secondary battery of the present invention equipped with a gas flow direction control means 44. Solid arrows in Figure 9 indicate the direction of gas flow during charging. Dashed arrows in Figure 10 indicate the direction of gas flow during discharging.

The gas flow control means 44 (for example, a three-way valve) makes it possible to easily change the gas flow direction during charging and discharging.

As shown in Verification Example 2 described below, by dividing the reactor 20 into an electrochemical reaction section 20A and a thermochemical reaction section 20B and setting the temperature of the electrochemical reaction section 20A higher than the temperature of the thermochemical reaction section 20B, in addition, by controlling the partial pressure of carbon monoxide in the electrochemical reaction section 20A to be lower than the partial pressure of carbon monoxide at equilibrium (Figure 5), it is possible to prevent carbon deposition in the electrochemical reaction section 20A (particularly near the negative electrode 21), and the secondary battery 1 of the present invention can be stably perform charging and discharging without being affected by deterioration of the negative electrode 21 due to carbon deposition.

As described above, the secondary battery 1 of the present invention can be constituted so that gas is continuously circulated inside the closed system 11. In addition, a tank 40 for storing carbon dioxide generated by discharging in a liquid state may be installed in the secondary battery 1 of the present invention.

In this case, in order to improve the energy efficiency of the entire system, the secondary battery 1 of the present invention is desirable to be equipped with means (devices) for adjusting the temperature and pressure.

The secondary battery 1 of the present invention is desirable to be equipped with a heat exchange promoting means 45 (for example, a heat exchanger or a cooling fan).

In addition, the secondary battery 1 of the present invention is desirable to be equipped with a pressurizing means 46 (for example, a pump or a compressor) and a depressurizing means 47 (for example, pressure reducing valve).

In the secondary battery 1 of the present invention, which is equipped with means for adjusting temperature and pressure, such as a heat exchange promoting means 45, a pressurizing means 46, and a depressurizing means 47, flow diagrams during charging are shown in Figures 11 and 12, and a flow diagram during discharging is shown in Figure 13.

The secondary battery 1 of the present invention desirably has a heat exchange promoting means 45 for decreasing a temperature of the gas (cooling the gas) in the middle of a flow passage of the gas (pipe) flowing from the reactor 20 (negative electrode 21) to the tank 40. In addition, the secondary battery 1 of the present invention desirably has a pressurizing means 46 for pressurizing the gas, in the middle of the flow passage of the gas (pipe).

With this constitution, carbon dioxide generated at the negative electrode 21 during discharging become easy to be liquefied and stored in the tank 40.

When the secondary battery 1 of the present invention has both a heat exchange promoting means 45 and a pressurizing means 46 in the middle of a flow passage of the gas (pipe) flowing from the reactor 20 (negative electrode 21) to the tank 40, it is desirable to place the heat exchange promoting means 45 on the reactor 20 side and the pressurizing means 46 on the tank 40 side (Figures 13). In other words, it is desirable that after decreasing the temperature of the gas exiting the reactor 20, the gas is pressurizing.

The secondary battery 1 of the present invention desirably has a heat exchange promoting means 45 for increasing a temperature of the gas (heating the gas) in the middle of a flow passage of the gas (pipe) flowing from the tank 40 to the reactor 20 (negative electrode 21).

With this constitution, reaction (R2) easily proceeds to the left side, it is possible to efficiently send carbon monoxide into the reactor 20 (negative electrode 21).

In the secondary battery 1 of the present invention, it is desirable that the heat removed when decreasing the temperature of the gas (cooling the gas) can be utilized when increasing the temperature of the gas (heating the gas).

In addition, in the secondary battery 1 of the present invention, it is desirable that the work generated by depressurizing by a depressurizing means 47 can be utilized when pressurizing by a pressurizing means 46 is performed.

This makes it possible to suppress energy loss in the entire system.

In Figure 12 (during charging) and Figure 13 (during discharging), the gas flow inside the closed system 11 is the same. That is, whether the inside of the tank 40 is above or below the equilibrium composition determines whether carbon dioxide is absorbed into the tank 40 or released from the tank 40. By changing the temperature and/or pressure of the tank 40, the absorption and release of carbon dioxide in the tank 40 can be controlled.

In a secondary battery in which gas is circulated inside a closed system 11 and which is equipped with means (devices) for adjusting the temperature and pressure, the circulating flow rate of carbon monoxide during discharging is important in determining the charge/discharge efficiency of the secondary battery 1.

By controlling the circulating flow rate of carbon monoxide, it is possible to realize high charge/discharge efficiency.

For this reason, the secondary battery 1 of the present invention desirably has a means for measuring a ratio of carbon dioxide to carbon monoxide inside the reactor 20.

In addition, the secondary battery 1 of the present invention more desirably has a means for adjusting a ratio of carbon dioxide to carbon monoxide, inside the reactor 20.

By adjusting the ratio of carbon dioxide to carbon monoxide to a desired value by such an adjusting means, a desired circulating flow rate of carbon monoxide can be obtained, and the secondary battery 1 of the present invention can realize high charge/discharge efficiency.

As examples of such an adjusting means, a combustor to convert carbon monoxide to carbon dioxide and another cell for adjusting the ratio of carbon dioxide to carbon monoxide.

In addition, since it is also possible to adjust the ratio of carbon dioxide to carbon monoxide by shifting reaction (R2) to the left side or the right side by pressurizing or depressurizing, a pressurizing means and a depressurizing means can also be such an adjusting means.

Figure 14 shows a flow diagram during discharging in the secondary battery 1 of the present invention equipped with the combustor 48.

The gas that has passed through the negative electrode 21 of the reactor 20 is sent to the combustor 48, and carbon monoxide contained in the gas is converted into carbon dioxide by reaction with oxygen that is supplied separately.

Figure 15 shows a flow diagram during discharging in the secondary battery 1 of the present invention equipped with a gas ratio adjustment cell 80 (a cell different from the cell 10 in the reactor 20). The gas ratio adjustment cell 80 comprises a negative electrode 81, a positive electrode 82, and an electrolyte (not shown in Figure 15).

The gas that has passed through the negative electrode 21 of the reactor 20 is sent to the negative electrode 81 of the gas ratio adjustment cell 80, and carbon monoxide contained in the gas is converted into carbon dioxide by reaction (R9).

As described above, the reactor 20 of the secondary battery 1 of the present invention may be divided into the electrochemical reaction section 20A and the thermochemical reaction section 20B.

Flow diagrams during charging in such a secondary battery 1 are shown in Figure 16 (when not having a reservoir 70), Figure 17 (when having a reservoir 70) and Figure 18 (when utilizing gas-liquid equilibrium in a tank). In addition, flow diagrams during discharging in such a secondary battery 1 are shown in Figure 19 and Figure 20 (when having a combustor).

It should be noted that the flow diagrams shown in each figure of the present application are merely examples of flow diagrams for the secondary battery 1 of the present invention. Cases in which some of the components shown in the flow diagrams (for example, the gas flow direction control means 44, the heat exchange promoting means 45, the pressurization means 46 or the depressurizing means 47) is absent, cases in which components not shown in the flow diagrams are included, cases in which the order of some of the components is different, and the like, are not outside the scope of the present invention.

In the secondary battery 1 of the present invention, deterioration of the negative electrode 21 due to carbon deposition is more easily occur during charging, that is, when a carbon deposition reaction occurs.

In the secondary battery 1 of the present invention, as a method for avoiding a decrease in performance and an increase in the frequency of maintenance due to such deterioration, a method to use different negative electrodes 21 during charging and discharging can be considered.

That is, the cell 10 of the secondary battery 1 of the present invention may have a plurality of negative electrode (a first negative electrode 21A and a second negative electrode 21B) (Figure 21).

The first negative electrode 21A and the second negative electrode 21B differ in the ease with which carbon is deposited on their surfaces, and carbon is more easily deposited on the surface of the second negative electrode 21B than on the surface of the first negative electrode 21A.

During charging, a voltage is applied between the first negative electrode 21A and the positive electrode 22. As a result, carbon dioxide is electrolyzed on the surface of the first negative electrode 21A, and carbon monoxide is generated (reaction (R1)). Carbon dioxide generated in reaction (R1) is converted into carbon by thermochemical reaction (R2). As described above, since carbon is more easily deposited on the surface of second negative electrode 21B, carbon is deposited on the surface of second negative electrode 21B during charging.

During discharging, discharging is performed between the second negative electrode 21B and the positive electrode 22. By discharging, carbon and/or carbon monoxide are electrochemically oxidized on the surface of the second negative electrode 21B to generate carbon dioxide (reactions (R7), (R8), and (R9)).

As shown in Verification Example 1 described below, by appropriately selecting the materials of the first negative electrode 21A and the second negative electrode 21B, it is possible to make carbon almost never be deposited on the surface of the first negative electrode 21A during charging.

Therefore, by using different negative electrodes 21 during charging and discharging, the negative electrode for charging, that is, the first negative electrode 21A, can be protected from deterioration caused by carbon deposition.

By selecting each material for the first negative electrode 21A and the second negative electrode 21B in consideration of the ease carbon deposition, it is possible to make it easier for carbon to be deposited on the surface of the second negative electrode 21B than on the surface of the first negative electrode 21A (the specific materials will be described later).

In addition, a catalyst for promoting carbon deposition may be installed only on the surface of the second negative electrode 21B, to make it easier for carbon to be deposited on the surface of the second negative electrode 21B than on the surface of the first negative electrode 21A.

The area of the first negative electrode 21A is desirably larger than the area of the second negative electrode 21B. In addition, the area of the first negative electrode 21A is more desirably 1.5 times or more, and particularly desirably 3 times or more, the area of the second negative electrode 21B.

When The area of the first negative electrode 21A is larger than the area of the second negative electrode 21B, in particular, when the ratio of the area of the first negative electrode 21A to the area of the second negative electrode 21B is equal to or more than the above, it is possible to secure a large amount of stored electricity. For this reason, it is possible to sufficiently store fluctuating electricity such as that derived from a solar cell.

The carbon (solid carbon) stored on the surface other than the surface of the negative electrode 21 is converted into carbon dioxide via the above-mentioned reactions (R2) and (R9) during discharging.

As can be seen from Figure 5, the higher the temperature, the more easily the thermochemical reaction (R2) incline to the left side (the more easily CO is generated).

Therefore, in a carbon/air secondary battery, in order to actively utilize the carbon (solid carbon) stored on the surface other than the surface of the negative electrode 21 for discharging, it is necessary to make the temperature inside the reactor 20 high, so as CO can easily generate. Specifically, it is necessary to set the temperature inside the reactor 20 during discharging to about 400 to 1000 °C, more desirably, to about 600 to 900 °C.

The secondary battery 1 of the present invention has a structure 60 which surrounds the reactor 20 and suppresses heat loss due to radiative heat transfer from the reactor 20.

As shown in Figures 22 and 23, a structure 60 surrounds the reactor 20 of the secondary battery 1 of the present invention.

As described above, in a carbon/air secondary battery, in order to actively utilize the carbon (solid carbon) stored on the surface other than the surface of the negative electrode 21 and to increase discharge efficiency, it is necessary to heat the inside of the reactor 20 to set the inside of the reactor 20 to a high temperature. In addition, since the entropy loss (TΔS), which is theoretically a factor in decreasing charge/discharge efficiency, is almost zero in the charge/discharge reaction of a carbon/air secondary battery, the introduction of a highly heat-insulating structure is easily directly connected to improved charge/discharge efficiency, and even if the interval between charge/discharge is long, it is possible to suppress decreasing of efficiency reduction and charge/discharge can be performed immediately.

In the secondary battery 1 of the present invention, by installing the structure 60, heat loss due to radiative heat transfer is suppressed, thereby energy loss is prevented.

In the secondary battery 1 of the present invention, since solid carbon is not deposited inside the tank 40, it is not necessary to heat the inside of the tank. For this reason, as shown in Figure 23, when the closed system 11 is constituted of a reactor 20 and a tank 40, it is not necessary that the structure 60 surrounds the tank 40 (it is desirable that the structure 60 does not surround the tank 40).

In addition, it is desirable that the structure 60 covers the reactor 20 as much as possible, but may not cover all of the reactor 20 due to the necessity of installing a pipe 41 to the tank 40, gas flow passage, and the like.

A surface of the structure 60 on the reactor 20 side is desirably a mirror structure.

Since the surface on the reactor 20 side is a mirror structure, the amount of radiative heat transfer is suppressed, thereby heat loss during charging and discharging, when the reactor 20 is forced to be a high temperature, can be efficiently suppressed.

It should be noted that the mirror structure refers to a structure that reflects light from infrared light to ultraviolet light, desirably from infrared light to visible light, and more desirably infrared light.

In addition, the structure 60 desirably has a vacuum heat-insulating layer. Having a vacuum heat-insulating layer, heat loss can be effectively suppressed regardless of the temperature range.

It is most desirable that a surface of the structure 60 on the reactor 20 side is a mirror structure and the structure 60 has a vacuum heat-insulating layer.

By doing so, the charge/discharge efficiency can be improved. In addition, from the state where charging and discharging are not performed to the start of charging and discharging, can be shortened.

Hereinafter, specific examples of the shapes of the cell 10, the reactor 20, and the like of the secondary battery 1 in the present invention will be described.

### (1) Embodiment 1

In a secondary battery 1 of Embodiment 1 of the present invention, the reactor 20 is columnar-shaped and its bottom surface is constituted of the electrolyte 23, the negative electrode 21 is installed on the electrolyte 23 inside the reactor 20, and the positive electrode 22 is installed on a position corresponding to the negative electrode 21 in the electrolyte 23 outside the reactor 20 (Figure 24 (perspective view) and Figure 25 (cross-sectional view)).

The reactor 20 has a columnar shape, for example, a circular cylinder (Figure 24), a triangular prism, a square prism, or a hexagonal prism.

The bottom surface of the reactor 20 (one of the two bottom surfaces) is constituted of an electrolyte 23, and the other surfaces of the reactor 20 (another bottom surface and the side surface) are electrolyte non-installed sections 25 where the electrolyte is not installed. The electrolyte 23 and the electrolyte non-installed sections 25 serve as a partition separating the inside and outside of the reactor 20.

Inside the reactor 20, a negative electrode 21 is installed on an electrolyte 23. The negative electrode 21 is desirably installed approximately on the center of the electrolyte 23 as shown in Figures 24 and 25.

As shown in Figures 24 and 25, the outer edge of the electrolyte 23 may be a negative electrode non-installed section 24 where the negative electrode 21 is not installed.

In this case, the ratio of the area of a part occupied by the negative electrode non-installed section 24 to the surface area of the electrolyte 23 inside the reactor 20 is preferably 0.1% or more, more preferably 0.5% or more, and particularly preferably 2% or more. Besides, the ratio is preferably 80% or less, more preferably 50% or less, further preferably 20% or less, and particularly preferably 3% or less.

When the ratio is within the above range, the cell output can be sufficiently increased. In addition, it is possible to secure the installation area of a catalyst installed section sufficiently.

Outside the reactor 20, the positive electrode 22 is installed on a position corresponding to the negative electrode 21 in the electrolyte 23. The shape and size of a part occupied by the positive electrode 22 on the surface of the electrolyte 23 outside the reactor 20, is desirably about the same as the shape and size of a part occupied by the negative electrode 22 on the surface of the electrolyte 23 inside the reactor 20.

A reactor end portion 27 may be exist on the bottom surface of the reactor 20, which is the electrolyte non-installed section 25 (Figures 24 and 25), or may be exist on the side surface of the reactor 20 (not shown in a diagram).

A gas flow passage 51 for sending oxygen to the positive electrode 22 may be installed outside the reactor 20. During discharging, a gas containing oxygen, for example, such as air or pure oxygen, is supplied to the gas flow passage 51. The outlet of the gas flow passage 51 is installed near the positive electrode 22, and it is possible to send the gas containing oxygen into the positive electrode 22 efficiently during discharging.

In addition, by installing a gas flow passage 52 so as to surround the outside of the gas flow passage 51, it is possible to send the gas containing oxygen into the positive electrode 22 more efficiently during discharging.

For example, as shown in Figures 24 and 25, the gas flow passage 52 can be formed by having a structure in which the side surface of the reactor 20 is continuous to the outside of the reactor 20 via the electrolyte 23.

By installing a catalyst for making it easy for carbon to deposit inside the reactor 20, the reaction inside the reactor 20 can be easily controlled, and cycle characteristics can be improved.

Inside the reactor 20, a part on which a catalyst for making it easy for carbon to deposit is installed (catalyst installed section 26) is desirably a negative electrode non-installed section 24 on the electrolyte 23 and a part near the electrolyte 23 in an electrolyte non-installed section 25 on the side surface of the reactor 20.

In the example shown in Figure 26, both the "negative electrode non-installed section 24 on the electrolyte 23" and the "part near the electrolyte 23 in an electrolyte non-installed section 25 on the side surface of the reactor 20" serve as the catalyst installed section 26.

In addition, on the electrolyte 23, by installing the negative electrode 21 as a plurality of area divided, a negative electrode non-installed section 24, which is an interface between the areas, may serve as the catalyst installed section 26.

For example, by placing a large number of negative electrodes 21 in a mesh-like pattern on the electrolyte 23, the interfaces between the negative electrodes 21 serve as a mesh-like negative electrode non-installed section 24. By installing a catalyst on such a mesh-like negative electrode non-installed section 24, the catalyst installed section 26 can be formed (not shown in a diagram).

In order to prevent deterioration of the negative electrode 21, it is desirable to avoid carbon deposition on the negative electrode 21. On the other hand, from the viewpoint of reaction efficiency, it is desirable that carbon is deposited inside the reactor 20 at a portion as close as possible to the negative electrode 21.

For this reason, it is optimal that the position of the catalyst installed section 26 is as described above.

### (2) Embodiment 2

In a secondary battery 1 of Embodiment 2 of the present invention, the reactor 20 is constituted of a cylindrical electrolyte 23, the negative electrode 21 is installed on an inner surface of the cylinder, and the positive electrode 22 is installed on an outer surface of the cylinder (Figure 27 (perspective view) and Figure 28 (cross-sectional view)).

In the secondary battery 1 of Embodiment 2 of the present invention, the cylindrical electrolyte 23 itself constitutes the reactor 20, and both ends of the electrolyte (cylinder) serve as reactor end portions 27.

As described above, the reactor end portion 27 is sealed, or connected to a tank 40 through a pipe 41. In the secondary battery 1 of Embodiment 2, when closed system 11 has the tank 40, one reactor end portion 27 may be connected to the tank 40 and the other reactor end portion 27 may be sealed, or both of the two reactor end portions 27 may be connected to the tank 40. When both of the two reactor end portions 27 are connected to the tank 40, the two reactor end portions 27 may be connected to the same tank 40 or may be connected to separate tanks 40.

In the reactor 20 (cylindrical electrolyte 23), when the reactor end portion 27 is connected to a tank 40 through a pipe 41, the connection between the reactor end portion 27 and the pipe 41 can be performed by, for example, a connection utilizing a joint (for example, an Ultra-Toll vacuum joint by Swagelok Corporation) or bonding with an epoxy resin.

Since the manufacturing of the cylindrical electrolyte 23 is easy, it is desirable that the entire cylinder is constituted of the electrolyte 23, as shown in Figures 27 and 28. However, a case in which a part of the cylinder is formed of something other than the electrolyte 23 (a part of the cylinder is the electrolyte non-installed section 25) is not outside the scope of Embodiment 2 of the present invention.

In addition, when the reactor end portion 27 is sealed, the sealing material may be formed of the electrolyte 23 or may be formed of something other than the electrolyte 23.

The negative electrode 21 is installed on an inner surface of the cylinder constituted of the electrolyte 23, and the positive electrode 22 is installed on the outer surface of the cylinder. The shape and size of a part occupied by the positive electrode 22 on the outer surface of the cylinder, is desirably about the same as the shape and size of a part occupied by the negative electrode 21 on the inner surface of the cylinder.

When the reactor end portion 27 is connected to the tank 40, it is desirable not to place the negative electrode 21 and the positive electrode 22 near the reactor end portion 27 of the cylinder (electrolyte 23), since it is necessary to install a space for connection to the pipe 41 therein.

For this reason, it is desirable to place the negative electrode 21 and the positive electrode 22 near the center of the cylinder (electrolyte 23). In other words, it is desirable that both ends of the cylinder (electrolyte 23) serve as the negative electrode non-installed sections 24.

When a catalyst for making it easy for carbon to deposit is installed inside the reactor 20, it is desirable to avoid installing the catalyst on the negative electrode 21. For this reason, at the both ends (reactor end portions 27) of the cylinder (electrolyte 23), there may be installed a part on which a negative electrode 21 is not installed (negative electrode non-installed sections 24) that is larger than the space necessary for connection to the pipe 41.

When a catalyst is installed in the negative electrode non-installed sections 24 on both ends of the cylinder, it is desirable to place the catalyst installed section 26 so that it is near the electrolyte 23 in the negative electrode non-installed sections 24.

As in the case of Embodiment 1, on the electrolyte 23, by installing the negative electrode 21 as a plurality of area divided, a negative electrode non-installed section 24, which is an interface between the areas, may serve as the catalyst installed section 26.

In addition, although not shown in a diagram, a portion where the negative electrode 21 is not placed may be installed near the center of the cylinder (electrolyte 23) in places, and such a portion may serve as the catalyst installed section 26. With this constitution, deterioration of the negative electrode 21 can be prevented, and reaction efficiency can be improved.

The ratio of the area of a part occupied by the negative electrode non-installed section 24 to the surface area of the inner surface of the cylindrical electrolyte 23 is preferably 1% or more, more preferably 2% or more, and particularly preferably 3% or more. Besides, the ratio is preferably 50% or less, more preferably 30% or less, further preferably 20% or less, and particularly preferably 5% or less.

When the ratio is within the above range, the cell output can be sufficiently increased. In addition, it is possible to secure the installation area of a catalyst installed section sufficiently.

The positive electrode 22 is installed on an outer surface of the cylinder (electrolyte 23), and during discharging, reaction (R6) by oxygen being taken into the positive electrode 22. The positive electrode 22 side is usually an open system and oxygen in the air is supplied. By having as shown in Figure 29 and 30, oxygen can be efficiently supplied to the positive electrode 22, and discharge efficiency is improved.

That is, the secondary battery 1 of Embodiment 2 of the present invention may have a module 50 in which a gas flow passage 51 is installed to cover outside a plurality of reactor 20.

### (3) Embodiment 3

In a secondary battery 1 of Embodiment 3 of the present invention, the reactor 20 is installed to cover the surroundings of the electrolyte 23 which is a cylinder, the positive electrode 22 is installed on an inner surface of the cylinder (electrolyte 23), and the negative electrode 21 is installed on an outer surface of the cylinder (electrolyte 23) (Figure 31).

The secondary battery 1 of Embodiment 3 of the present invention is the same as the secondary battery 1 of Embodiment 2 in that the electrolyte 23 is constituted of a cylindrical material, but the positional relationship between the negative electrode 21 and the positive electrode 22 on the surface of the electrolyte 23 is reversed from that of the secondary battery of Embodiment 2.

That is, in the secondary battery 1 of Embodiment 3, the inside of the cylinder (electrolyte 23) serves as a flow passage for oxygen, and the surroundings of the cylinder (electrolyte 23) serves as the reactor 20.

The outer wall of the reactor 20 may be an electrolyte non-installed section 25 (Figure 31) or may be the electrolyte 23.

As in the secondary battery of Embodiment 2, the reactor end portion 27 is sealed, or connected to a tank 40 through a pipe 41, and the reactor 20 installed to cover the surroundings of the cylinder (electrolyte 23) constitutes a closed system 11.

The method of connecting the reactor end portion 27 and the tank 40 or the like, and the method of sealing the reactor end portion 27 can be performed by the similar method as that of the secondary battery of the second embodiment.

In the secondary battery 1 of Embodiment 3 of the present invention, the shape, size, and placing method of the negative electrode 21 and the positive electrode 22 inside the reactor 20 can also be the same as those of the secondary battery 1 of Embodiment 2, except that the positional relationship between the negative electrode 21 and the positive electrode 22 is reversed.

In addition, the placement of the catalyst installed section inside the reactor 20 can also be the same as that of the secondary battery 1 of the second embodiment.

The secondary battery 1 of Embodiment 3 of the present invention may have a module 50 in which a common reactor 20 is installed to cover the surroundings of a plurality of cylinder (electrolyte 23) (Figure 32).

The reactor 20 encloses the plurality of the cylinder (electrolyte 23). The reactor end portion 27 is sealed, or connected to a tank 40 through a pipe 41, and the reactor 20 constitutes one closed system 11.

The inside of each of the plurality of the cylinder (electrolyte 23) serves as a gas flow passage 51 of oxygen.

### (4) Embodiment 4

In the secondary battery 1 of Embodiment 4 of the present invention, the reactor 20 is cylindrical, the inside and outside of the reactor 20 are separated by a plurality of circular ring-shaped electrolyte 23 and a plurality of circular ring-shaped interconnect material 28, which are alternatingly placed, a plurality of positive electrode 22 is placed outside the reactor 20 in contact with both the electrolyte 23 and the adjacent interconnect materials 28 and such that the positive electrodes 22 do not come into contact with each other, a plurality of negative electrode 21 is placed inside the reactor 20 in contact with both the electrolyte 23 and the adjacent interconnect materials 28 and such that the negative electrodes 22 do not come into contact with each other, and the positive electrodes 22 and negative electrodes 21 in contact with an arbitrary electrolyte 23 are in contact with separate interconnect materials 28 on both sides of the arbitrary electrolyte 23.

The interconnect material 28 is formed of a conductive substance, has a dense structure that is gas-impermeable, and does not allow permeation of oxide ions (O²⁻).

Both ends of the cylindrical reactor 20 serve as reactor end portions 27 (are sealed or connected to a tank 40), electrolytes 23 and interconnect materials 28, and an electrolyte 23 and an interconnect material 28, both of which are gas-impermeable, are placed on the sides of the reactor 20. Therefore, the inside of the reactor 20 is separated from the outside.

The positive electrodes 22 placed outside the reactor 20 are in contact with both the electrolyte 23 and the adjacent interconnect material 28, and a gap 29 exists between the positive electrodes 22.

The negative electrodes 21 placed inside the reactor 20 are in contact with both the electrolyte 23 and the adjacent interconnect material 28, and the negative electrodes 21 do not come into contact with each other. The electrolyte 23 may be L-shaped and may be sandwiched between the negative electrode 21 and the negative electrode 21 as shown in Figures 33, or a gap (not shown in a diagram) may exist.

When viewed from an arbitrary electrolyte 23, the positive electrodes 22 and the negative electrodes 21 in contact with the arbitrary electrolyte 23, are each in contact with separate interconnect materials 28.

Since the secondary battery 1 of Embodiment 4 has the above-mentioned structure, it can be said that a large number of cells 10 comprising a negative electrode 21, a positive electrode 22 and an electrolyte 23, are connected in series by the interconnect material 28.

For example, in the case of a secondary battery 1 having a pair of electrodes (a negative electrode 21 and a positive electrode 22) inside and outside a cylinder as in Embodiment 2, a gas concentration distribution is generated in the longitudinal direction of the circular tube, and Nernst potential changes. For this reason, current corresponding to the potential difference flows in the longitudinal direction. At that time, loss due to Joule heat occurs, and the electromotive force ultimately becomes the lowest voltage.

Since in the secondary battery 1 of Embodiment 4, a large number of cells 10 are connected in series, there is no such problem and high output density can be achieved.

The secondary battery 1 of Embodiment 4 may further have a support material 30 inside the negative electrode 21 placed inside the reactor 20 (Figure 34).

The support material 30 has a certain degree of thickness and is porous.

The negative electrode 21, the positive electrode 22, the electrolyte 23, and the interconnect material 28, which are components of the secondary battery 1 of Embodiment 4, do not all require a thickness in order to exhibit their functions. Therefore, by installing the support material 30, the reactor 20 can have strength even when these components are made thinned.

In addition, by installing the support material 30, carbon is hardly to be deposited on the surface of the negative electrode during charging and deterioration of the negative electrode 21 becomes easy to be prevented.

A catalyst for promoting carbon deposition can be given to the inner surface side of the support material 30 (a catalyst installed section 26 can be installed). By doing so, deterioration of the negative electrode 21 becomes easier to be prevented.

Specific examples of the materials used for each component of the secondary battery 1 of the present invention are described below. Unless otherwise specified, the specific examples of materials described below are applicable to any of the secondary battery 1 of Embodiment 1, the secondary battery 1 of Embodiment 2, the secondary battery 1 of Embodiment 3, and the secondary battery 1 of Embodiment 4, described above.

The negative electrode 21 of the secondary battery 1 of the present invention has a negative electrode material, a negative electrode current collector, and the like.

The negative electrode material is, for example, a composite metal oxide or a cermet. Here, the "cermet" refers to a material in which metal and metal oxide powders are mixed and sintered. The composite metal oxide and the cermet are desirably porous.

As the composite metal oxide, from the viewpoint of reliably obtaining sufficient output characteristics, durability, and the like during discharging, stabilized zirconia blended with yttria (Y₂O₃-ZrO₂) (hereinafter, sometimes referred to as "YSZ"); CeO₂ doped with at least one selected from the group consisting of Gd, La, Y, Sm, Nd, Ca, Mg, Sr, Ba, Dy, and Yb [particularly of these, CeO₂ doped with Gd (hereinafter, sometimes referred to as "GDC"), and CeO₂ doped with Sm]; Sc₂O₃-ZrO₂ (hereinafter, sometimes referred to as "ScSZ"); Sm₂O₃-CeO₂ (hereinafter, sometimes referred to as "SDC"); LaGaO₃; or the like is particularly preferred.

In addition, from the viewpoint of obtaining sufficient output characteristics during discharging, the conductivity of the composite metal oxide is preferably 0.01 to 10 S/cm at 1000 °C.

As the cermet, a cermet of at least one metal selected from the group consisting of Ni, Pt, Au, Cu, Fe, W and Ta, and a composite metal oxide (particularly the above-mentioned composite metal oxide) is preferred. From the viewpoint of reliably obtaining sufficient output characteristics and the like during discharging, a cermet of nickel and a composite metal oxide is mentioned as a preferred one, particularly a cermet of nickel and the above-mentioned composite metal oxide is mentioned as a preferred one.

From the viewpoint of output characteristics, a cermet of nickel and YSZ (hereinafter, sometimes referred to as "Ni/YSZ"), a cermet of nickel and GDC (hereinafter, sometimes referred to as "Ni/GDC"), a cermet of nickel and ScSZ (hereinafter, sometimes referred to as "Ni/ScSZ"), or a cermet of nickel and SDC (hereinafter, sometimes referred to as "Ni/SDC"), are most preferred.

When the cell 10 of the secondary battery 1 of the present invention has a plurality of negative electrode, i.e., a first negative electrode 21A and a second negative electrode 21B, as described above, it is desirable to use a material on which carbon is easily deposited as a negative electrode material of the second negative electrode 21B.

As such a material for the second negative electrode 21B, a cermet of Ni and the above-mentioned composite metal oxide, and a cermet of Fe and the above-mentioned composite metal oxide, are mentioned.

As a material for the first negative electrode 21A to be used in combination with the material for the second negative electrode 21B, a negative electrode material on which carbon is more hardly deposited than the material for the second negative electrode 21B can be appropriately used.

The shape and the constituent material of the current collector of the negative electrode 21 are not particularly limited as long as they have electron conductivity and is chemically and physically stable in the operating temperature range of the secondary battery of the present invention, and the similar ones as those equipped in known solid oxide cells (SOFCs) can be used.

The positive electrode 22 of the secondary battery 1 of the present invention has a positive electrode material, a positive electrode current collector, and the like.

The composition and shape of the positive electrode material are not particularly limited and the similar ones as those generally used in a positive electrode equipped in known solid oxide cells (SOFCs). For example, materials consisting of composite metal oxides of (LaSr)MnO₃ (hereinafter, sometimes referred to as "LSM") type and (LaSr)CoO₃ (hereinafter, sometimes referred to as "LSC") type, or the like can be preferably used. As particularly preferrable ones, for example, La_{0.85}Sr_{0.15}MnO₃ or the like is mentioned.

The constitution of the current collector of the positive electrode 22 is similar to that of the current collector of the negative electrode 21 described above. The constituent material and shape are not particularly limited, and the similar ones as those equipped in known solid oxide cells (SOFCs) can be used.

The electrolyte 23 is an ion-conductive solid oxide. The electrolyte 23 is a transfer medium for oxide ions (O²⁻) and also functions as a partition to prevent direct contact between the reducing agent (the solid carbon mentioned above) and a gas containing oxygen (for example, air). The electrolyte 23 has a dense structure that is gas-impermeable. The constituent material of the electrolyte 23 is not particularly limited, and a material used in known solid oxide cells (SOFCs) can be used appropriately. The electrolyte 23 is preferably constituted of a material that has high conductivity of oxide ion, and is chemically stable and resistant to thermal shock under conditions from an oxidizing atmosphere on the side of the positive electrode 22 side to a reducing atmosphere on the side of the negative electrode 21 side.

As a material that satisfies such requirements, for example, stabilized zirconia such as yttria-stabilized zirconia (YSZ) and scandia-stabilized zirconia (ScSZ); lanthanum gallate; ceria type solid solutions or the like, is mentioned as preferred ones.

In addition, from the viewpoint of obtaining sufficient output characteristics during power generation, the conductivity of the electrolyte 4 is preferably 0.01 to 10 S/cm at 1000°C.

A material forming the electrolyte non-installed section 25 inside the reactor 20 is, for example, mullite, alumina, silicon carbide, quartz, and boron nitride. The reason why the electrolyte-free portion 25 is desirably formed of the above-mentioned materials is, for example, ease in decrease of cost and processing.

As a catalyst installed in the catalyst installed section 26, for example, a catalyst in which a metal is supported on glass wool, is mentioned. As the metal, a transition metal is preferable. The transition metal is, for example, Fe, Ni, Co, W, Ta, Pt, or Cu.

A material constituting the interconnect material 28 is, for example, La₁₋ₓSrₓCrO₃, La₁₋ₓCaₓCrO₃ (x represents an arbitrary number between 0 and 1).

A material constituting the support material 30 is, for example, a porous metal such as porous nickel, a porous electronically conductive oxide and a porous metal/oxide mixed material.

A material constituting the structure 60 that surrounds the reactor 20 and suppresses heat loss due to radiative heat transfer from the reactor 20 is, for example, a laminated structural material of quartz and a metal such as Ni, Pt or the like.

The secondary battery of the present invention repeatedly performs charging and discharging by utilizing a redox reaction between carbon and carbon dioxide, and carbon (solid carbon) may be separately supplied into the reactor 20 at the beginning of the charging and discharging cycle.

A method for supplying carbon (solid carbon) into the reactor 20 separately is not particularly limited. For example, a method in which an organic compound containing at least carbon and hydrogen as constituent elements is introduced into the reactor 20 and a thermal decomposition reaction of the organic compound is made to proceed, is mentioned. The organic compound is, for example, a hydrocarbon such as methane, ethane, propane or butane; or an alcohol such as methanol, ethanol, propanol or butanol.

### EXAMPLES

Hereinafter, the present invention will be explained more specifically by showing Verification Examples. The Verification Examples described herein are intended to show that it is theoretically possible to implement the present invention and that the effects of the present invention described in this specification can be obtained, and do not necessarily show embodiments when implementing the present invention.

Verification Example 1 (Investigation of negative electrode material in secondary battery having a plurality of negative electrode)

A carbon/air secondary battery (CASB) having a plurality of negative electrode was produced. YSZ was used as an electrolyte, and LSM/ScSZ was used as a positive electrode. Inside the reactor, a first negative electrode made of GDC and a second negative electrode made of Ni/GDC were installed in a opposite position to the positive electrode on the electrolyte.

### (Step 1)

First, at a temperature of 800 °C, a mixed gas of CO and CO₂ (CO:CO₂ = 67.6:111 by volume) was filled into the reactor, which is the negative electrode side, and the valves installed in the reactor were closed to make the inside of the reactor a closed system. Oxygen was flowed at 111 sccm into the positive electrode (counter electrode) side of the cell in order to keep the partial pressure of oxygen constant (to reduce the effect of voltage change due to generation of oxygen).

From this state, 10 mA was supplied to the first negative electrode (GDC) and the counter electrode for 90 minutes to perform charging.

### (Step 2)

In order to confirm whether carbon was deposited on the first negative electrode (GDC) in Step 1, discharging was performed using the first negative electrode (GDC).

After step 1 was completed, the valves installed in the reactor were opened to make the inside of the reactor an open system. Ar was supplied into the reactor at 189 sccm, and residual CO and CO₂ gases were evacuated. While supplying Ar, 0.1 mA was supplied to the first negative electrode (GDC) and the counter electrode, and discharging was performed until the terminal voltage reached 0.1 V.

It should be noted that when Ar is supplied at about 200 sccm, discharging by gases such as CO is not generated, as described in Non-Patent Document 3 by the present inventors.

### (Step 3)

In order to confirm whether carbon was deposited on the second negative electrode (Ni/GDC) in Step 1, discharging was performed using the second negative electrode (Ni/GDC).

As in step 2, while supplying Ar into the reactor at the same flow rate, 1.0 mA was supplied to the second negative electrode (Ni/GDC) and the counter electrode, and discharging was performed until the terminal voltage reached 0.1 V.

The results are shown in Figure 35. While no discharging occurred between the first negative electrode (GDC) and the counter electrode in step 2, discharging was confirmed between the second negative electrode (Ni/GDC) and the counter electrode in step 3.

In addition, under similar experimental conditions, the states of the first negative electrode (GDC) and the second negative electrode (Ni/GDC) after charging was performed in step 1 were confirmed. While the first negative electrode (GDC) did not change in appearance, black carbon deposit was confirmed on the second negative electrode (Ni/GDC).

As described above, it has been shown that by appropriately selecting the materials of the first negative electrode and the second negative electrode, different negative electrodes can be used during charging and discharging, thereby carbon deposition on the negative electrode for charging (first negative electrode) can be prevented.

Verification Example 2 (Investigation of the stability of charging and discharging in a reactor divided into an electrochemical reaction section and a thermochemical reaction section)

A carbon/air secondary battery (CASB) in which a reactor is divided into an electrochemical reaction section 20A and a thermochemical reaction section 20B, was produced, as shown in Figure 36. The surroundings of the electrochemical reaction section 20A and the thermochemical reaction section 20B could be heated separately by heating means 20C and 20D, respectively.

### (Charging step)

It was set so that the gas was introduced from the electrochemical reaction section 20A side, the gas that passed through the electrochemical reaction section 20A (negative electrode 21) was sent to the thermochemical reaction section 20B, and the gas that went through the thermochemical reaction section 20B was exhausted to the outside.

Charging was performed at 0.052 A with the temperature of the electrochemical reaction section 20A set to 900 °C, the temperature of the thermochemical reaction section 20B set to 670 °C, and the mixed gas of 40 sccm of carbon monoxide and 10 sccm of carbon dioxide being supplied to the electrochemical reaction section 20A.

The direction of gas flow during the charging step is shown by solid lines in Figure 36.

### (Discharging step)

After completion on the charging step, the direction of the gas flow was switched so that the gas was introduced from the thermochemical reaction section 20B side, the gas that passed through the thermochemical reaction section 20B (catalyst installed section 26) was sent to the electrochemical reaction section 20A, and the gas that went through the electrochemical reaction section 20A (negative electrode 21) was exhausted to the outside.

Discharging was performed at 0.052 A with the temperature of the electrochemical reaction section 20A set to 900 °C, the temperature of the thermochemical reaction section 20B set to 670 °C, 10 sccm of carbon dioxide being supplied to the thermochemical reaction section 20B, and oxygen being supplied to the positive electrode 22 in order to keep the partial pressure of oxygen constant.

The direction of gas flow during the discharging step is shown by dashed lines in Figure 36.

The above-mentioned charging step, the above-mentioned discharging step, and an interval step in which neither charging nor discharging was performed, were taken as one cycle, and the cycle was repeated twice.

The results are shown in Figure 37. Even when charging and discharging were performed for a long period, the voltage was almost constant both during charging and discharging. In addition, the voltages in the charging step and the discharging step were almost the same in the first and second cycle in the first and the second cycle.

That is, it was shown that when the inside of the reactor is divided into an electrochemical reaction section and a thermochemical reaction section, and conditions are set such that carbon deposition due to reaction (R2) easily occurs in the thermochemical reaction section where a catalyst is installed, voltage fluctuations due to deterioration of the negative electrode do not occur.

It is presumed that no carbon deposition occurs in the electrochemical reaction section (particularly in the surroundings of the negative electrode).

It should be noted that in Verification Example 2, the purpose of the verification was to verify that deterioration of the negative electrode due to carbon deposition could be prevented by dividing the reactor 20 into an electrochemical reaction field and a thermochemical reaction field, and the verification was performed with the reactor 20 being an open system.

As described in this specification, by equipping the secondary battery 1 with a heat exchanger, pump, or the like, in the secondary battery 1 which has a closed system, it is possible to circulate a desired amount of gas (carbon monoxide and carbon dioxide) inside the closed system, thereby creating a situation equivalent to that of Verification Example 2.

### INDUSTRIAL APPLICABILITY

The secondary battery of the present invention is a carbon/air secondary battery that can secure a large amount of stored electricity, has high charge/discharge efficiency, and has good cycle characteristics, and therefore can be widely used, for example, as a secondary battery for commercial use in factories, hospitals, or the like, for general households, and for use in transportation equipment such as automobiles, trains, and ships.

### REFERENCE SIGNS LIST

1: Secondary battery
10: Cell
11: Closed system
12: Open system
20: Reactor
20A: Electrochemical reaction section
20B: Thermochemical reaction section
20C: Heating means
20D: Heating means
21: Negative electrode
21A: First negative electrode
21B: Second negative electrode
22: Positive electrode
23: Electrolyte
24: Negative electrode non-installed section
25: Electrolyte non-installed section
26: Catalyst installed section
27: Reactor end portion
28: Interconnect material
29: Gap
30: Support material
40: Tank
41: Pipe
42: Pipe
43: Pipe
44: Gas flow direction control means
45: Heat exchange promoting means
46: Pressurizing means
47: Depressurizing means
48: Combustor
50: Module
51: Gas flow passage
52: Gas flow passage
60: Structure
70: Reservoir
80: Gas ratio adjustment cell
81: Negative electrode of gas ratio adjustment cell
82: Positive electrode of gas ratio adjustment cell

## Claims

1. A secondary battery having a cell comprising a negative electrode, a positive electrode, and an electrolyte made of a gas-impermeable and ion-conductive solid oxide placed in contact with the negative electrode and the positive electrode, wherein during charging, carbon dioxide is electrolyzed on the surface of the negative electrode, causing carbon to deposit on the negative electrode side, which is a closed system, and at the positive electrode, oxygen is generated from oxide ions which are generated at the negative electrode and are permeating the electrolyte, and during discharging, oxide ions are generated from oxygen at the positive electrode, and carbon and/or carbon monoxide are electrochemically oxidized on the surface of the negative electrode to generate carbon dioxide, wherein the secondary battery has a reactor in which the negative electrode is installed inside, which is separated from the outside by the electrolyte and which is configured to store carbon that deposits during charging inside, and a structure which surrounds the reactor and suppresses heat loss due to radiant heat transfer from the reactor.

2. The secondary battery according to Claim 1, wherein the inside of the reactor can be pressurized.

3. The secondary battery according to Claim 1, wherein the closed system has a pressurizable tank connected to the reactor.

4. The secondary battery according to Claim 3, having a control means for controlling temperature and/or pressure during storage and/or supply of carbon dioxide between the reactor and the tank.

5. The secondary battery according to Claim 1, wherein gas is continuously circulated within inside the closed system.

6. The secondary battery according to any of Claims 1 to 5, wherein the reactor comprises an electrochemical reaction section in which the negative electrode is installed, and a thermochemical reaction section in which a catalyst for promoting carbon deposition is installed, and the electrochemical reaction section and the thermochemical reaction section are connected by a pipe that is a gas flow passage.

7. The secondary battery according to Claim 6, wherein the gas is continuously circulated between the electrochemical reaction section and the thermochemical reaction section.

8. The secondary battery according to Claim 7, having a means for controlling a flow direction of the gas.

9. The secondary battery according to any of Claims 1 to 5, wherein the cell has a plurality of negative electrode, and during charging, carbon dioxide is electrolyzed on a surface of a first negative electrode and carbon is deposited on a surface of a second negative electrode, and during discharging, and carbon and/or carbon monoxide are electrochemically oxidized on the surface of the second negative electrode to generate carbon dioxide.

10. The secondary battery according to Claim 9, wherein an area of the first negative electrode is larger than an area of the second negative electrode.

11. The secondary battery according to any of Claims 1 to 5, having a means for measuring a ratio of carbon dioxide to carbon monoxide inside the reactor.

12. The secondary battery according to Claim 4, having a heat exchange promoting means for decreasing a temperature of the gas and/or a pressurizing means for pressurizing the gas in the middle of a flow passage of the gas flowing from the reactor to the tank.

13. The secondary battery according to Claim 4 or Claim 12, having a heat exchange promoting means for increasing a temperature of the gas in the middle of a flow passage of the gas flowing from the tank to the reactor.

14. The secondary battery according to any of Claims 1 to 5, wherein a surface of the structure on the reactor side is a mirror structure.

15. The secondary battery according to any of Claims 1 to 5, wherein the structure has a vacuum heat-insulating layer.

16. The secondary battery according to any of Claims 1 to 5, wherein a catalyst for promoting carbon deposition is installed in a negative electrode non-installed section and/or in an electrolyte non-installed section inside the reactor.

17. The secondary battery according to any of Claims 1 to 5, wherein the reactor is columnar-shaped and its bottom surface is constituted of the electrolyte, the negative electrode is installed on the electrolyte inside the reactor, and the positive electrode is installed on a position corresponding to the negative electrode on the electrolyte outside the reactor.

18. The secondary battery according to claim 17, wherein a catalyst for promoting carbon deposition is installed on a negative electrode non-installed section on the electrolyte and/or on a part near the electrolyte in an electrolyte non-installed section on the side surface of the reactor, inside the reactor.

19. The secondary battery according to any of Claims 1 to 5, wherein the reactor is constituted of a cylindrical electrolyte, the negative electrode is installed on an inner surface of the cylinder, and the positive electrode is installed on an outer surface of the cylinder.

20. The secondary battery according to claim 19, having a module in which a gas flow passage is installed to cover outside a plurality of reactor.

21. The secondary battery according to any of Claims 1 to 5, wherein the reactor is installed to cover the surroundings of the electrolyte which is a cylinder, the positive electrode is installed on an inner surface of the cylinder, and the negative electrode is installed on an outer surface of the cylinder.

22. The secondary battery according to claim 21, having a module in which a common reactor is installed to cover the surroundings of a plurality of the cylinder.

23. The secondary battery according to any of Claims 1 to 5, wherein the reactor is cylindrical, the inside and outside of the reactor are separated by a plurality of circular ring-shaped electrolyte and a plurality of circular ring-shaped interconnect material, which are alternatingly placed, a plurality of positive electrode is placed outside the reactor in contact with both the electrolyte and the adjacent interconnect materials and such that the positive electrodes do not come into contact with each other, a plurality of negative electrode is placed inside the reactor in contact with both the electrolyte and the adjacent interconnect materials and such that the negative electrodes do not come into contact with each other, and the positive electrodes and negative electrodes in contact with an arbitrary electrolyte are in contact with separate interconnect materials on both sides of the arbitrary electrolyte.
